# EUROPEAN PATENT SPECIFICATION

(11) **EP 4 310 691 B1**
(45) Date of publication and mention of the grant of the patent: **15.10.2025**
(21) Application number: 22877819.7
(22) Date of filing: 25.08.2022
(51) Int. Cl.: G06F 16/2453, G06F 16/2455, G06F 12/127

(54) **BLOCKCHAIN-BASED DATA PROCESSING METHOD, APPARATUS, AND DEVICE, AND STORAGE MEDIUM**
VERFAHREN UND VORRICHTUNG ZUR BLOCKCHAIN-BASIERTEN DATENVERARBEITUNG SOWIE SPEICHERMEDIUM
PROCÉDÉ, APPAREIL ET DISPOSITIF DE TRAITEMENT DE DONNÉES À BASE DE CHAÎNE DE BLOCS ET SUPPORT DE STOCKAGE

(30) Priority: 09.10.2021 CN 202111176926
(43) Date of publication of application: 24.01.2024
(73) Proprietor: Tencent Technology (Shenzhen) Company Limited, Shenzhen, Guangdong, 518057 (CN)
(72) Inventor: LIU, Qucheng, Shenzhen, Guangdong 518057 (CN)
(74) Representative: Novagraaf International SA
(86) International application number: PCT/CN2022/114722
(87) International publication number: WO 2023/056797

(56) References cited:
- CN-A- 110 443 712
- CN-A- 112 395 300
- CN-A- 113 609 167
- US-A1- 2018 113 815
- US-A1- 2019 310 943
- MESSANAKIS KOSTAS ET AL: "Smart-Views: Decentralized OLAP View Management Using Blockchains", 5 September 2021, BIG DATA ANALYTICS AND KNOWLEDGE DISCOVERY; [LECTURE NOTES IN COMPUTER SCIENCE; LECT.NOTES COMPUTER], SPRINGER INTERNATIONAL PUBLISHING, CHAM, PAGE(S) 216 - 221, ISBN: 978-3-030-86533-7, ISSN: 0302-9743, XP047691733

## Description

### FIELD OF THE TECHNOLOGY

This application relates to the field of computer technologies, and in particular, to a blockchain-based data processing method and apparatus, a computer device, a computer-readable storage medium, and a computer program product.

### BACKGROUND OF THE DISCLOSURE

Data in a blockchain is stored in a drive, because data in the drive can be stored persistently, while data in an internal memory will disappear after a blockchain node is shut down. However, the read/write efficiency of the drive by the blockchain node is far lower than the read/write efficiency of the internal memory by the blockchain node. Therefore, to improve the read efficiency of the data in the blockchain, when working, the blockchain node will allocate a piece of internal memory for the blockchain as a cache of the blockchain to cache some hot data, that is, data that needs to be accessed frequently, such as codes of a recent transaction, a hot contract, and the like. The cache of the blockchain is limited, and in a case that the cache is insufficient, the blockchain node usually evicts data with relatively low popularity based on the least recently used eviction mechanism.

Document "Smart-Views: Decentralized OLAP View Management Using Blockchains" by Messanakis et al., published on 5 September 2021 in "Big Data Analytics and Knowledge Discovery" by Springer International Publishing (XP047691733) discloses that blockchain infrastructures utilise some form of smart contracts and cache local results so that subsequent queries are expedited. It is proposed a cost-based view eviction policy that lists the views in the cache in increasing order of their amortised displacement cost. The eviction process then discards views from the cache by scanning this list until enough space is generated for storing the new result.

### SUMMARY

The invention is set out in the appended set of claims. The dependent claims set out particular embodiments. In a case that a recently launched contract becomes a short-term hot contract, the short-term access frequency of a large amount of data of the contract may be higher than that of data of some long-term hot contracts frequently used during the entire operation of the blockchain node. In a case that the cache is insufficient, the data of the long-term hot contract will be evicted according to the least recently used eviction mechanism. In a case that the blockchain node needs to access the data of the long-term hot contract subsequently, the blockchain node has to acquire the data from a database in the drive, lowering the data access efficiency.

A blockchain-based data processing method includes the following steps:
acquiring a cache application instruction for a target custom contract, and creating a cache region for the target custom contract in a total cache region according to custom cache creation parameters in the cache application instruction, the total cache region including at least two cache regions, and each cache region in the total cache region having a separate cache eviction mechanism;
searching for the cache region for the target custom contract in the at least two cache regions and taking the cache region as a target cache region , upon reception of to-be-cached contract data for the target custom contract;
evicting cached contract data in the target cache region according to the cache eviction mechanism for the target cache region to obtain a new available cache capacity in a case that an available cache capacity of the target cache region is less than a to-be-cached capacity of the to-be-cached contract data, the new available cache capacity being greater than the to-be-cached capacity; and
storing the to-be-cached contract data into the target cache region according to the new available cache capacity.

A blockchain-based data processing apparatus includes:
an instruction acquisition module, configured to acquire a cache application instruction for a target custom contract;
a cache creation module, configured to create a cache region for the target custom contract in a total cache region according to custom cache creation parameters in the cache application instruction, the total cache region including at least two cache regions, and each cache region in the total cache region has a separate cache eviction mechanism;
a cache search module, configured to search for the cache region for the target custom contract in the at least two cache regions and take the cache region as a target cache region , upon reception of to-be-cached contract data for the target custom contract;
a data eviction module, configured to evict cached contract data in the target cache region according to the cache eviction mechanism for the target cache region to obtain a new available cache capacity in a case that an available cache capacity of the target cache region is less than a to-be-cached capacity of the to-be-cached contract data, the new available cache capacity being greater than the to-be-cached capacity; and
a data storage module, configured to store the to-be-cached contract data into the target cache region according to the new available cache capacity.

A computer device includes: a processor, a memory, and a network interface,
the processor being connected to the memory and the network interface, and the memory storing computer-readable instructions that, when executed by the processor, cause the processor to perform the method according to the embodiments of this application.

A non-volatile computer-readable storage medium stores computer-readable instructions that are adapted to be loaded by a processor to perform the method according to the embodiments of this application.

A computer program product or computer program includes computer-readable instructions, the computer-readable instructions are stored in a computer-readable storage medium, and a processor of a computer device reads the computer-readable instructions from the computer-readable storage medium and executes the computer-readable instructions to cause the computer device to perform the method according to the embodiments of this application.

### BRIEF DESCRIPTION OF THE DRAWINGS

In order to describe the technical solutions in the embodiments of this application or the related art more clearly, the drawings used in the description of the embodiments or the related art will be briefly introduced below. The drawings in the following description are only some embodiments of this application, and those of ordinary skill in the art may obtain other drawings according to these drawings without involving any inventive effort.
FIG. 1 is a schematic structural diagram of a blockchain node system according to an embodiment of this application.
FIG. 2a is a schematic diagram of a scene of blockchain-based data processing according to an embodiment of this application.
FIG. 2b is a schematic diagram of a scene of blockchain-based data processing according to an embodiment of this application.
FIG. 3 is a schematic flowchart of a blockchain-based data processing method according to an embodiment of this application.
FIG. 4 is a schematic diagram of a scene of custom cache approval according to an embodiment of this application.
FIG. 5 is a schematic flowchart of a blockchain-based data processing method according to an embodiment of this application.
FIG. 6 is a schematic framework diagram of a blockchain multi-cache implementation according to an embodiment of this application.
FIG. 7 is a schematic structural diagram of a blockchain-based data processing apparatus according to an embodiment of this application.
FIG. 8 is a schematic structural diagram of a computer device according to an embodiment of this application.

### DETAILED DESCRIPTION

The technical solutions in the embodiments of this application will be clearly and completely described below with reference to the drawings in the embodiments of this application. The described embodiments are only some but not all of the embodiments of this application. All other embodiments obtained by those of ordinary skill in the art based on the embodiments of this application without involving any inventive effort shall fall within the scope of protection of this application.

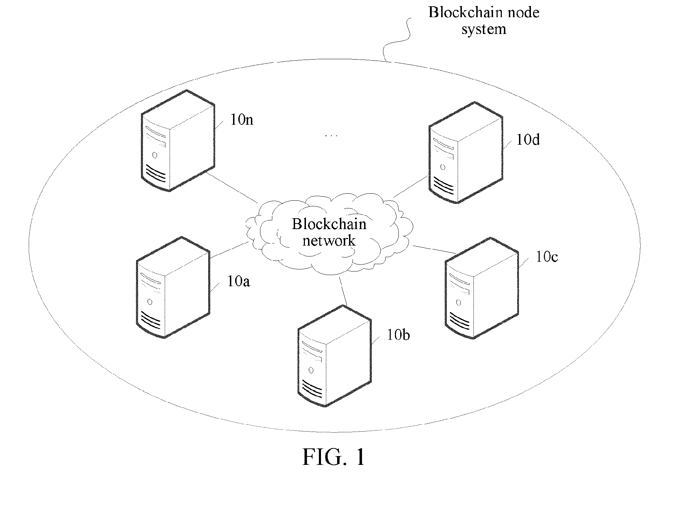

Referring to FIG. 1, FIG. 1 is a schematic structural diagram of a blockchain node system according to an embodiment of this application. A blockchain is a novel application model of computer technologies such as distributed data storage, peer-to-peer transmission, consensus mechanism, and encryption algorithms, and is mainly configured to organize data in chronological order, and encrypt the data into a ledger such that the data cannot be tampered and forged. Moreover, the blockchain may verify, store, and update the data. The blockchain is essentially a decentralized database, and each node in the database stores the same piece of blockchain. In a blockchain network, nodes may be divided into consensus nodes and service nodes, and the consensus nodes are responsible for the consensus of the whole network of the blockchain. A process of writing transaction data into a ledger in the blockchain network may be as follows: a client transmits transaction data to a service node, then the transaction data is transmitted between the service nodes in the blockchain network as a relay baton until a consensus node receives the transaction data, the consensus node packs the transaction data into a block and performs consensus with other consensus nodes, and after a consensus is reached, the block carrying the transaction data is written into a ledger.

A block is a data packet bearing transaction data (that is, a transaction service) in the blockchain network, and is a data structure that is marked with a timestamp and a hash value of a previous block. The block is verified by the consensus mechanism of the network and a transaction in the block is determined. A hash value may be also referred to as an information feature value or a feature value, and is generated by converting input data of any length into a password by a hash algorithm and performing fixed output. Original input data cannot be retrieved by decoding a hash value, as the hash value is a unidirectional encryption function. In the blockchain, each block (except an initial block) includes a hash value of a previous block, and the previous block is referred to as a parent block of the current block. A hash value is the potential core basis and most important aspect of the blockchain technology, which preserves the authenticity of recorded and viewed data, and the integrity of the blockchain as a whole.

The blockchain system may include a smart contract, the smart contract in the blockchain system may be understood as a code that may be understood and executed by the nodes (including the consensus nodes) in the blockchain, and any logic may be executed to obtain a result. A user may invoke the smart contract deployed in the blockchain by initiating a transaction service request through a client, then the service node in the blockchain may transmit the transaction service request to the consensus node, and the consensus nodes in the blockchain may respectively operate the smart contract. The blockchain may include one or more smart contracts, and these smart contracts may be distinguished through an identity document (ID) or a name. The transaction service request initiated by the client may also carry an identity document or a name of the smart contract to specify the smart contract that needs to be operated by the blockchain. In a case that the smart contract specified by the client is a contract that requires data reading, the consensus nodes will access local ledgers to read data, and finally the consensus nodes will verify whether execution results are consistent with each other (that is, perform consensus). In a case that the execution results are consistent, the execution results may be stored into the local ledgers of the consensus nodes, and returned to the client.

Managements of the smart contract may be divided into management operations such as deployment, update, and deletion. The blockchain node may create or modify a code of the specified contract (that is, the smart contract, the contracts described below all refer to the smart contract) in the blockchain system by initiating one transaction (request) to change an execution logic of the contract. Execution of the smart contract refers to invoking the contract deployed in the blockchain by initiating one transaction. The nodes in the blockchain system respectively operate the same contract. For a contract that requires data reading, the nodes will access the ledgers of the nodes. Finally, the nodes will verify whether execution results are consistent (consensus) with each other, and store a necessary result into the ledgers of the nodes and return the result in a case that the execution results are consistent.

The blockchain node system shown in FIG. 1 may correspond to a blockchain network, which includes, but is not limited to, a blockchain network corresponding to a consortium blockchain. The blockchain node system refers to a system used for sharing data between a blockchain node and a blockchain node, and may include a plurality of blockchain nodes, which may specifically include a blockchain node 10a, a blockchain node 10b, a blockchain node 10c, a blockchain node 10d, ..., and a blockchain node 10n. Each node may receive data transmitted by the outside during normal working, and upload a block based on the received data, and may also transmit data to the outside. To ensure data intercommunication between the nodes, there may be data connections between the nodes. For example, there is a data connection between the blockchain node 10a and the blockchain node 10b, there is a data connection between the blockchain node 10a and the blockchain node 10c, and there is a data connection between the blockchain node 10b and the blockchain node 10c.

It will be appreciated that the blockchain nodes may transmit data or a block with each other through the foregoing data connections. The blockchain network may implement the data connections between the blockchain nodes based on node identifiers. Each blockchain node in the blockchain network has a corresponding node identifier, and may store node identifiers of other blockchain nodes connected to the blockchain node, so that the blockchain node broadcasts acquired data or a generated block to other blockchain nodes according to the node identifiers of other blockchain nodes subsequently. For example, a node identifier list as shown in Table 1 may be maintained in the blockchain node 10a, which stores node names and node identifiers of other nodes.

**Table 1**

| Node name | Node identifier |
|---|---|
| Blockchain node 10a | 117.114.151.174 |
| Blockchain node 10b | 117.116.189.145 |
| Blockchain node 10c | 117.114.151.183 |
| Blockchain node 10d | 117.117.125.169 |
| ... | ... |
| Blockchain node 10n | 117.116.189.125 |

The node identifier may be an Internet Protocol (IP) address for interconnection between networks and any other information that can be used for identifying a node in a blockchain network, and only the IP address is taken as an example in Table 1. For example, the blockchain node 10a may transmit information (such as a block) to the blockchain node 10b according to the node identifier 117.116.189.145, and the blockchain node 10b may determine that the information is transmitted by the blockchain node 10a according to the node identifier 117.114.151.174.

In the blockchain, before a block is uploaded, the consensus nodes in the blockchain network need to perform consensus on the block, and the block can be added to the blockchain after a consensus is reached. It will be appreciated that in a case that the blockchain is applied to some scenarios of government or commercial organizations, not all participating nodes (that is, the blockchain nodes in the foregoing blockchain node system) in the blockchain have sufficient resources and necessity to become consensus nodes of the blockchain. For example, in the blockchain node system shown in FIG. 1, the blockchain node 10a, the blockchain node 10b, the blockchain node 10c, and the blockchain node 10d may serve as consensus nodes in the blockchain node system. The consensus nodes in the blockchain node system participate in consensus, that is, perform consensus on a block (including a batch of transactions), including generating a block and voting on a block. Non-consensus nodes do not participate in consensus, but help propagate the block, a voting message, mutual synchronization states, and the like.

It will be appreciated that a connection mode of the foregoing data connection is not defined, the data connection may be a direct or indirect connection in a wired communication mode, or in a wireless communication mode, or in other connection modes, which is not defined herein.

It will be appreciated that the blockchain-based data processing method according to the embodiments of this application may be performed by a computer device, and the computer device includes, but is not limited to, the foregoing blockchain node (may be a terminal or server). The foregoing server may be an independent physical server, or may also be a server cluster or distributed system composed of a plurality of physical servers, or may also be a cloud server providing basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform. The foregoing terminal may be, but is not limited to, a smart phone, a tablet computer, a notebook computer, a desktop computer, a smart speaker, a smart watch, an on board terminal, or the like.

It will be appreciated that the embodiments of this application may be applied to various scenarios, which include, but are not limited to, scenarios such as smart transport and assistant driving. The blockchain node system may perform consensus on some driving behavior data, road trajectory data, and the like that are transmitted by the on board terminal, and upload and store the data after a consensus is reached.

The blockchain-based data processing method according to the embodiments of this application may be applied to the blockchain node system shown in FIG. 1. As shown in FIG. 1, during operation of the blockchain node (such as the blockchain node 10a) in the blockchain node system, data will be stored in a database of a drive, an access speed of the blockchain node 10a to an internal memory is much faster than an access speed of the blockchain node 10a to the drive, because the blockchain node 10a may allocate an internal memory region as a total cache region of the blockchain to cache some data that needs to be accessed frequently in the blockchain. The blockchain node 10a may perform further delicacy management on the total cache region, and divide the total cache region into at least two cache regions. Each cache region stores different types of data, and each cache region in the total cache region has a separate cache eviction mechanism, i.e., a cache eviction mechanism that is independent of that for any other cache region in the total cache region. The cache eviction mechanism is used for evicting partial data in a cache region to release the cache region occupied by the data in a case that an available cache capacity of the cache region is insufficient, that is, the data in the cache region is evicted without affecting data in other cache regions. The blockchain node 10a may allocate a cache region for a target custom contract in the blockchain. Specifically, after acquiring a cache application instruction for a target custom contract, the blockchain node 10a may create a cache region for the target custom contract in the total cache region according to custom cache creation parameters in the cache application instruction. The cache region for the target custom contract stores cached contract data for the target custom contract only.

When receiving to-be-cached contract data for the target custom contract, the blockchain node 10a will search for the cache region for the target custom contract in the at least two cache regions, and take the cache region as a target cache region. The blockchain node 10a will store the to-be-cached contract data into the target cache region in a case that an available cache capacity of the target cache region is greater than a to-be-cached capacity that is required by the to-be-cached contract data; and evict cached contract data in the target cache region according to the cache eviction mechanism for the target cache region to obtain a new available cache capacity in a case that the available cache capacity of the target cache region is less than the to-be-cached capacity of the to-be-cached contract data, and finally store the to-be-cached contract data into the target cache region according to the new available cache capacity. It will be appreciated that the new available cache capacity needs to be greater than the to-be-cached capacity.

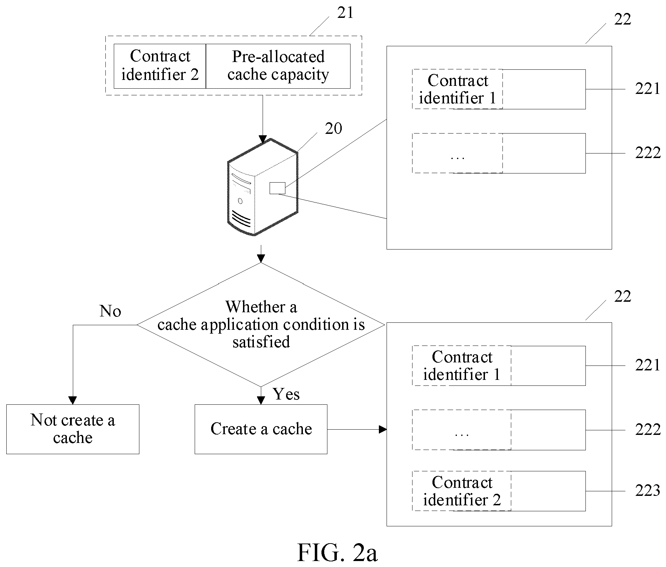

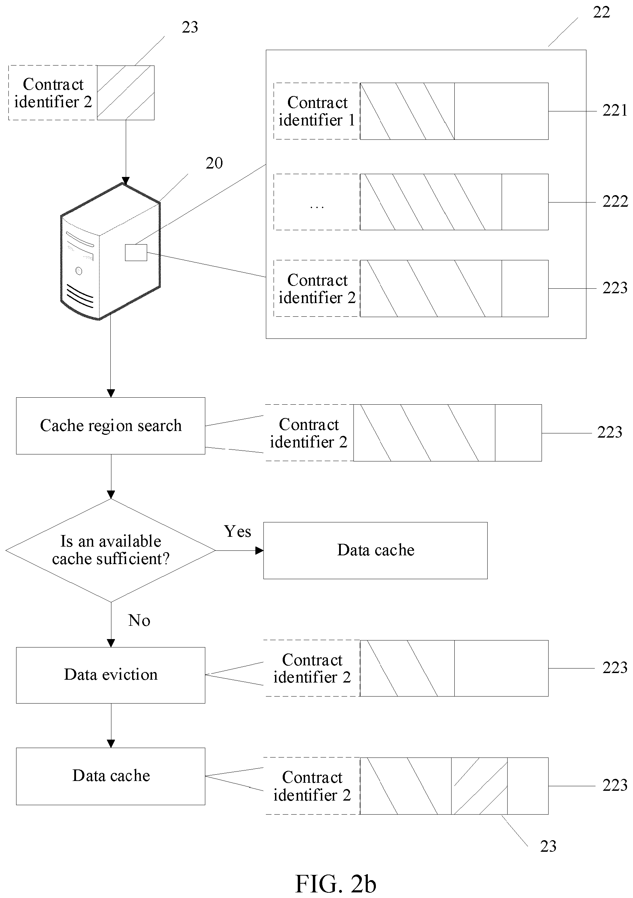

Further, referring to FIG. 2a and FIG. 2b, FIG. 2a and FIG. 2b are schematic diagrams of scenes of blockchain-based data processing according to embodiments of this application. A blockchain node 20 shown in FIG. 2a may be any blockchain node in the blockchain node system in the foregoing embodiment corresponding to FIG. 1, such as the blockchain node 10b. An internal memory of the blockchain node 20 includes a total cache region 22 used for storing data related to a blockchain. As shown in FIG. 2a, the total cache region 22 may include at least two cache regions. Different cache regions may be used for storing different types of data. For example, the total cache region 22 includes a cache region 221 and a cache region 222. The cache region 221 may be a cache region for a custom contract. The custom contract refers to a contract for which a separate cache region is allocated. The cache region 221 may be mapped with a contract identifier 1, which indicates that the cache region 221 is associated with a custom contract A of which a contract identifier is the contract identifier 1. The cache region 221 is used for storing cached contract data of the custom contract A. The contract identifier may be a contract name. The cache region 222 may be a cache region for a general-purpose contract. In the blockchain, all contracts that are not associated with specified cache regions are general-purpose contracts. The cache region 222 is used for storing cached contract data of the general-purpose contract. There may be a plurality of general-purpose contracts. Therefore, the cache region 222 may store cached contract data respectively associated with contract identifiers of the plurality of general-purpose contracts.

As shown in FIG. 2a, the blockchain node 20 acquires a cache application instruction 21 for a custom contract B. The cache application instruction 21 includes custom cache creation parameters, which include a contract identifier, assumed to be a contract identifier 2, of the custom contract B, and also include a pre-allocated cache capacity of the custom contract B. The cache application instruction 21 may be obtained by the blockchain node 20 by executing a cache application contract according to a cache application request. The cache application request may be initiated by any blockchain node (such as the blockchain node 10c in the blockchain node system in the foregoing embodiment corresponding to FIG. 1) in the blockchain node system. First a blockchain node generates the to-be-uploaded cache application instruction 21 based on the cache application request and the cache application contract, then the blockchain node system will perform consensus on the to-be-uploaded cache application instruction 21, and the blockchain node determines whether to execute the cache application instruction 21 after a consensus is reached. It will be appreciated that the cache application instruction 21 is used for instructing the blockchain node 20 to allocate a cache region having the pre-allocated cache capacity for the custom contract B in the total cache region 22. However, in some cases, not all contracts in the blockchain nodes need to be allocated with cache regions. Therefore, in an embodiment, a cache application condition may be set, and the blockchain node 20 needs to first determine whether the cache application instruction 21 satisfies the cache application condition and then execute the cache application instruction 21. The cache application condition may be set according to the actual situation. For example, the cache application condition is that the cache application instruction 21 needs to be approved by N blockchain node system developers, and N is an integer, which is not defined herein. The cache application condition is used to avoid a situation where a large number of contracts are maliciously created to generate a huge cache, which will cause system crash. As shown in FIG. 2a, in a case that the cache application instruction 21 satisfies the cache application condition, the blockchain node 20 may create a cache region 223 associated with the custom contract B in the total cache region 22, and the cache region 223 is mapped with the contract identifier 2 of the custom contract B. In a case that the cache application instruction 21 does not satisfy the cache application condition, the blockchain node 20 does not execute the cache application instruction 21, that is, does not create the cache region 223 associated with the custom contract B in the total cache region 22.

Further, referring to FIG. 2b, as shown in FIG. 2b, when receiving to-be-cached contract data 23 for the custom contract B, the blockchain node 20 needs to first find out the cache region 223 associated with the custom contract B from the total cache region 22. The blockchain node 22 may accurately find out the cache region 223 according to a mapping relationship between the contract identifier 2 in the to-be-cached contract data 23 and the cache region 223. Then, the blockchain node 20 needs to determine whether an available cache in the cache region 223 is sufficient, that is, whether an available cache capacity of the cache region 223 is less than a to-be-cached capacity of the to-be-cached contract data 23. In a case that the available cache capacity of the cache region 223 is not less than the to-be-cached capacity of the to-be-cached contract data 23, the blockchain node 20 may directly store the to-be-cached contract data 23 into the cache region 223. In a case that the available cache capacity of the cache region 223 is less than the to-be-cached capacity of the to-be-cached contract data 23, the blockchain node will evict cached contract data in the cache region 223 according to a cache eviction mechanism for the cache region 223, that is, release partial cached contract data, to obtain a new available cache capacity of the cache region 223. It will be appreciated that the new available cache capacity is greater than the to-be-cached capacity. Finally, the blockchain node 20 may store the to-be-cached contract data 23 into the cache region 223 according to the new available cache capacity.

According to the embodiments of this application, the total cache region is divided into a plurality of cache regions, and these cache regions are subjected to delicacy management, that is, one cache region may be separately specified for each contract, and the size of each cache region may be configured as needs. Thus, data of a long-term hot contract and a short-term hot contract may coexist in the blockchain, and caches of different contracts do not affect each other. Therefore, data frequently used by the blockchain node may be found out from the caches, avoiding the low data access efficiency caused by accessing the data of the long-term hot contract in the database of the drive according to the cache eviction mechanism, improving the access efficiency of the data of the long-term hot contract and the short-term hot contract, and improving the overall performance of the blockchain.

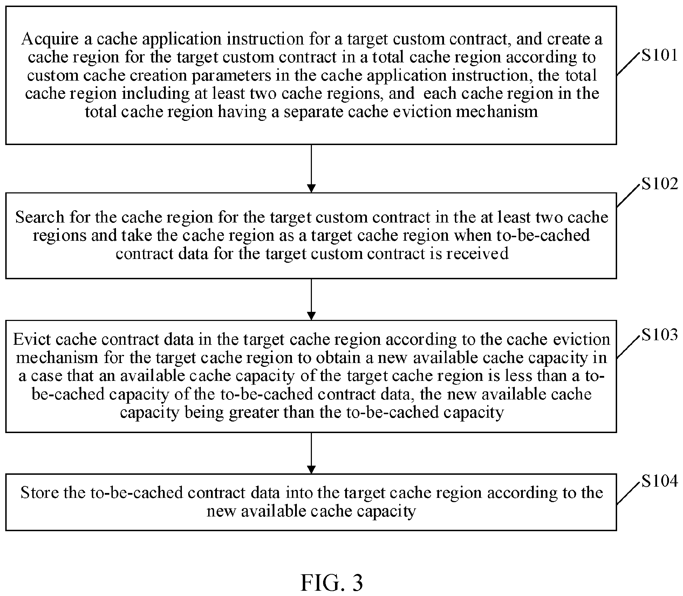

Further, referring to FIG. 3, FIG. 3 is a schematic flowchart of a blockchain-based data processing method according to an embodiment of this application. The data processing method may be performed by a blockchain node (such as any blockchain node in the foregoing blockchain node system shown in FIG. 1). The following description is made by taking a case where the blockchain-based data processing method is performed by a blockchain node as an example. The blockchain-based data processing method may include at least the following steps S101 to S104.

S101: Acquire a cache application instruction for a target custom contract, and create a cache region for the target custom contract in a total cache region according to custom cache creation parameters in the cache application instruction, the total cache region including at least two cache regions, and each cache region in the total cache region has a separate cache eviction mechanism, i.e., a cache eviction mechanism that is independent of that for any other cache region in the total cache region.

Specifically, the cache application instruction is used for instructing the blockchain node to allocate a corresponding cache region in the total cache region for the target custom contract. The total cache region refers to a partial internal memory region that is separated by the blockchain node from an internal memory region, and is used for temporarily storing hot data for a blockchain. The hot data refers to data that needs to be frequently accessed by the blockchain node during working, such as system configuration data, contract data, recent transaction data, and the like. To reduce the interaction between different hot data, the blockchain node may divide the total cache region into at least two cache regions, and different cache regions are used for storing different hot data. For example, the at least two cache regions may include a custom contract cache region, and the custom contract cache region is used for storing cached contract data for a custom contract that is associated with the custom contract cache region only. The at least two cache regions may include a general-purpose contract cache region, the general-purpose contract cache region is used for storing cached contract data respectively for one or more general-purpose contracts, and the general-purpose contract refers to a contract that is not associated with a custom contract cache region. The at least two cache regions may further include a block cache region, and the block cache region is used for storing cached block data for a to-be-uploaded block that is not written into a blockchain ledger. The at least two cache regions may further include a transaction cache region, and the transaction cache region is used for storing cached transaction data for a to-be-uploaded transaction that is not written into the blockchain ledger. The at least two cache regions may further include a system cache region, and the system cache region is used for storing cached contract data respectively for one or more system contracts, such as configuration parameters of a blockchain node system. Types of the cache regions may be set according to actual functions of the blockchain node system, which will not be defined herein.

Specifically, among contracts used by the blockchain node system, some contracts may become hot contracts and will be frequently accessed and used by the blockchain node in the blockchain node system. To improve the data access efficiency of the blockchain node and the performance of the blockchain node system, these contracts may be taken as custom contracts and associated with specific cache regions in the total cache region, and the cache region for the custom contract is used for storing contract data of the custom contract only.

In an embodiment, a specific implementation process of acquiring the cache application instruction for the target custom contract by the blockchain node may be as follows. The blockchain node acquires a cache application request, and the cache application request includes a cache application contract identifier and custom cache creation parameters associated with the target custom contract. Then, the blockchain node invokes a cache application contract indicated by the cache application contract identifier in the cache application request, and executes, in a contract virtual machine, the cache application contract according to the custom cache creation parameters to obtain the cache application instruction for the target custom contract. The cache application instruction includes the custom cache creation parameters. The custom cache creation parameters may include a contract identifier and a pre-allocated cache capacity of the target custom contract. Therefore, a specific implementation process of creating the cache region for the target custom contract in the total cache region according to the custom cache creation parameters in the cache application instruction may be as follows. A pre-allocated cache region having the pre-allocated cache capacity is acquired from the total cache region. The pre-allocated cache region and the contract identifier of the target custom contract are mapped to obtain a cache region for the target custom contract.

Specifically, to avoid system crash caused by malicious behavior of applying for a cache region for a large number of contracts, the blockchain node needs to determine whether the cache application instruction satisfies a cache application condition before executing the cache application instruction. In an embodiment, in a case that a consensus on the cache application instruction is reached in a consensus network, the blockchain node may acquire one or more cache approval results for the cache application instruction through a cache approval component. Each cache approval result is data on which a consensus is reached in the consensus network. Then, in a case that among the one or more cache approval results, the number of cache approval results indicating that cache approval succeeds exceeds an approval threshold value, it is determined that the cache application instruction satisfies the cache application condition. The cache approval results may be determined by a developer of the blockchain node system.

S102: Search for the cache region for the target custom contract in the at least two cache regions and take the cache region as a target cache region , upon reception of to-be-cached contract data for the target custom contract.

Specifically, it can be seen from the above that when creating the cache region for the target custom contract, the blockchain node may map the cache region and the contract identifier of the target custom contract. Therefore, the blockchain node may search for the target cache region according to a mapping relationship between the contract identifier of the target custom contract and the cache region for the target custom contract.

S103: Evict cached contract data in the target cache region according to the cache eviction mechanism for the target cache region to obtain a new available cache capacity in a case that an available cache capacity of the target cache region is less than a to-be-cached capacity of the to-be-cached contract data, the new available cache capacity being greater than the to-be-cached capacity.

Specifically, a cache capacity of each cache region in the blockchain node is limited, the blockchain node will release partial cached contract data that is stored in the target cache region according to the cache eviction mechanism for the target cache region to obtain a new available cache capacity in a case that the available cache capacity of the target cache is insufficient. It will be appreciated that the new available cache capacity needs to be greater than the to-be-cached capacity of the to-be-cached contract data.

In an embodiment, a specific implementation process of evicting the cached contract data in the target cache region according to the cache eviction mechanism for the target cache region to obtain the new available cache capacity may be as follows. The blockchain node may acquire a first access record list for the target cache region. Then, the blockchain node takes cached contract data whose recent data access time is the earliest as to-be-evicted target contract data in the target cache region. Finally, the blockchain node releases the to-be-evicted target contract data, and takes an available cache capacity of the target cache region from which the to-be-evicted target contract data is released as a new available cache capacity. The first access record list includes the recent data access time respectively for at least two pieces of cached contract data, and the at least two pieces of cached contract data are stored in the target cache region, that is, are cached contract data for the target custom contract. For example, a blockchain node A may create an access record list C (that is, the first access record list) for a cache region B associated with a custom contract m, the cache region B stores cached contract data b1, cached contract data b2, and cached contract data b3, the access record list C may store the recent data access time of the cached contract data b1 by the blockchain node A, that is, the last time when the blockchain node A accessed the cached contract data b1, and the access record list C may further store the recent data access time of the cached contract data b2 by the blockchain node A and the recent data access time of the cached contract data b3 by the blockchain node A. It is assumed that the recent data access time of the cached contract data b1 by the blockchain node A is 9:21, the recent data access time of the cached contract data b2 by the blockchain node A is 9:19, and the recent data access time of the cached contract data b3 by the blockchain node A is 9:22. In a case that the blockchain node A receives to-be-cached contract data b4 for the custom contract m, the cache region B is the target cache region, and an available cache capacity of the cache region B is insufficient, the blockchain node A will search the access record list C to determine cached contract data whose recent data access time is the earliest, that is, the cached contract data b2, take the cached contract data b2 as the to-be-evicted target contract data, and release the cached contract data b2. However, it will be appreciated that in a case that the cache region B is still insufficient to store the to-be-cached contract data b4 after the blockchain node A releases the cached contract data b2, the blockchain node A will acquire cached contract data whose recent data access time is the earliest from the remaining cached contract data in the cache region B, take the cached contract data as new to-be-evicted target contract data, and release the new to-be-evicted target contract data until a new available cache capacity of the cache region B is sufficient to store the to-be-cached contract data b4.

In an embodiment, a specific implementation process of evicting the cached contract data in the target cache region according to the cache eviction mechanism for the target cache region to obtain the new available cache capacity may be as follows. The blockchain node may acquire a second access record list for the target cache region. Then, the blockchain node takes cached contract data with the least number of data accesses as to-be-evicted target contract data. Finally, the blockchain node releases the to-be-evicted target contract data, and takes an available cache capacity of the target cache region from which the to-be-evicted target contract data is released as a new available cache capacity. The second access record list includes the number of data accesses respectively for at least two pieces of cached contract data within a target time period. The at least two pieces of cached contract data are stored in the target cache region, that is, are cached contract data for the target custom contract. The target time period usually refers to a recent period of time, such as the last five minutes, the last ten minutes, and the last hour. The number of data accesses of the cached contract data within the target time period is recorded, which may reflect the recent access frequency of the cached contract data. For example, a blockchain node D may create an access record list F (that is, the second access record list) for a cache region E associated with a custom contract n, the cache region E stores cached contract data e1, cached contract data e2, and cached contract data e3, and the access record list F may store the number of data accesses of the cached contract data e1 by the blockchain node D within a target time period, the number of data accesses of the cached contract data e2 by the blockchain node D within the target time period, and the number of data accesses of the cached contract data e3 by the blockchain node D within the target time period. It is assumed that the number of data accesses of the cached contract data e1 by the blockchain node D within the last hour is 10, the number of data accesses of the cached contract data e2 by the blockchain node D within the last hour is 50, and the number of data accesses of the cached contract data e3 by the blockchain node D within the last hour is 1. In a case that the blockchain node D receives to-be-cached contract data e4 for the custom contract n, the cache region E is the target cache region, and an available cache capacity of the cache region E is insufficient, the blockchain node D will search the access record list F to determine cached contract data with the least number of data accesses within the last hour, that is, the cached contract data e3, take the cached contract data e3 as the to-be-evicted target contract data, and release the cached contract data e3. However, it will be appreciated that in a case that the cache region E is still insufficient to store the to-be-cached contract data e4 after the blockchain node D releases the cached contract data e3, the blockchain node D will acquire cached contract data with the least number of data accesses within the target time period from the remaining cached contract data in the cache region E, take the cached contract data as new to-be-evicted target contract data, and release the new to-be-evicted target contract data until a new available cache capacity of the cache region E is sufficient to store the to-be-cached contract data e4.

In an embodiment, a specific implementation process of evicting the cached contract data in the target cache region according to the cache eviction mechanism for the target cache region to obtain the new available cache capacity may be as follows. The blockchain node may acquire a data storage record list for the target cache region. Then, the blockchain node takes cached contract data with the earliest data cache time as to-be-evicted target contract data in the target cache region. Finally, the blockchain node releases the to-be-evicted target contract data, and takes an available cache capacity of the target cache region from which the to-be-evicted target contract data is released as a new available cache capacity. The data storage record list includes the data cache time respectively for at least two pieces of cached contract data. The at least two pieces of cached contract data are stored in the target cache region, that is, are cached contract data for the target custom contract. For example, a blockchain node G may create a data storage record list I for a cache region H associated with a custom contract 1, the cache region H stores cached contract data h1, cached contract data h2, and cached contract data h3, and the data storage record list I may store the data cache time when the cached contract data h1, the cached contract data h2, and the cached contract data h3 are respectively stored into the cache region H. It is assumed that the data cache time when the blockchain node G stores the cached contract data h1 into the cache region H is 9:21, the data cache time when the blockchain node G stores the cached contract data h2 into the cache region H is 9:19, and the data cache time when the blockchain node G stores the cached contract data h3 into the cache region H is 9:22. In a case that the blockchain node G receives to-be-cached contract data h4 for the custom contract 1, the cache region H is the target cache region, and an available cache capacity of the cache region H is insufficient, the blockchain node G will search the data storage record list I to determine cached contract data with the earliest data cache time, that is, the cached contract data h2, take the cached contract data h2 as the to-be-evicted target contract data, and release the cached contract data h2. However, it will be appreciated that in a case that the cache region H is still insufficient to store the to-be-cached contract data h4 after the blockchain node G releases the cached contract data h2, the blockchain node G will acquire cached contract data with the earliest data cache time from the remaining cached contract data in the cache region H, take the cached contract data as new to-be-evicted target contract data, and release the new to-be-evicted target contract data until a new available cache capacity of the cache region H is sufficient to store the to-be-cached contract data h4.

S104: Store the to-be-cached contract data into the target cache region according to the new available cache capacity.

Specifically, the blockchain node stores the to-be-cached contract data into the corresponding target cache region.

According to the method provided in the embodiments of this application, a cache application instruction for a target custom contract may be acquired, and a cache region for the target custom contract is created in a total cache region according to custom cache creation parameters in the cache application instruction. Then, when to-be-cached contract data for the target custom contract is received, the cache region for the target custom contract is found out from at least two cache regions and taken as a target cache region. In a case that an available cache capacity of the target cache region is less than a to-be-cached capacity of the to-be-cached contract data, cached contract data in the target cache region is evicted according to a cache eviction mechanism for the target cache region to obtain a new available cache capacity, and finally the to-be-cached contract data is stored into the target cache region according to the new available cache capacity. The total cache region includes the at least two cache regions, and each cache region in the total cache region has a separate cache eviction mechanism, i.e., a cache eviction mechanism that is independent of that for any other cache region in the total cache region . The new available cache capacity is greater than the to-be-cached capacity. According to the method provided in the embodiments of this application, a dedicated cache region may be allocated for a contract in a blockchain system, the cache region is used for storing cached contract data of the contract only, and if a cache is insufficient, only the cached contract data in the cache region is evicted according to an eviction mechanism without affecting cached contract data of other contracts. Therefore, a dedicated cache region may be allocated for a contract that needs to be frequently accessed in a blockchain, preventing cached contract data for the contract from being affected by cached contract data of other contracts and being evicted, preventing a blockchain node from frequently acquiring data for the contract from a drive, and improving the data access efficiency of the blockchain node.

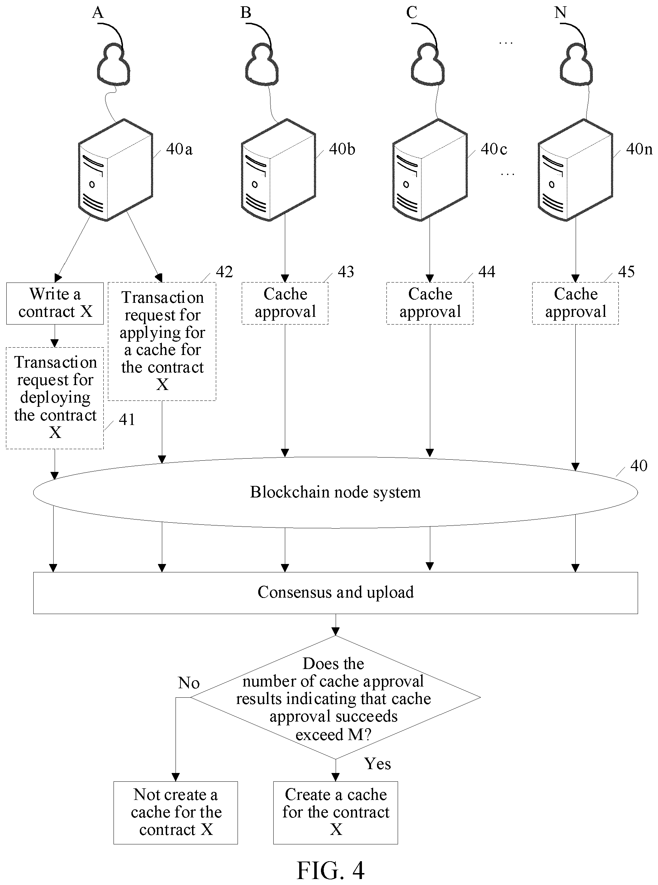

Further, referring to FIG. 4, FIG. 4 is a schematic diagram of a scene of custom cache approval according to an embodiment of this application. A blockchain node system 40 shown in FIG. 4 may be the blockchain node system in the foregoing embodiment corresponding to FIG. 1. A blockchain node 40a associated with a contract developer A shown in FIG. 4 may be any blockchain node in the blockchain node system in the foregoing embodiment corresponding to FIG. 1. For example, the blockchain node 40a may be the blockchain node 10a in FIG. 1. A blockchain node 40b associated with a chain developer B shown in FIG. 4, a blockchain node 40c associated with a chain developer C, and a blockchain node 40n associated with a chain developer N are any blockchain node in the blockchain node system in the foregoing embodiment corresponding to FIG. 1. For example, the blockchain node 40b may be the blockchain node 10b in FIG. 1, the blockchain node 40c may be the blockchain node 10c in FIG. 1, and the blockchain node 40n may be the blockchain node 10d in FIG. 1. It will be appreciated that the blockchain node 40a, the blockchain node 40b, the blockchain node 40c, and the blockchain node 40d are blockchain nodes in the blockchain node system 40, and need to complete the consensus and upload process of a blockchain as other blockchain nodes in the blockchain node system. The contract developer may publish a contract that may be executed by the blockchain nodes in the blockchain. The chain developers may manage and modify an underlying architecture and a logic of the blockchain.

As shown in FIG. 4, the contract developer A may write a contract X through the blockchain node 40a, deploy the contract X, and transmit a transaction request 41 for deploying the contract X to the blockchain node system 40. The blockchain nodes in the blockchain node system 40 will perform consensus and uploading on the transaction request 41 for deploying the contract X, and each blockchain node in the blockchain node system 40 will write the contract X into the blockchain in a case that a consensus on the transaction request 41 for deploying the contract X is reached in the blockchain node system 40. In a case that the contract X is a general-purpose contract, and any blockchain node in the blockchain node system 40 needs to write contract data for the contract X into a cache when working, the blockchain node will only write the contract data for the contract X together with other general-purpose contracts into a general-purpose contract cache region. In a case that the contract X is a hot contract in the blockchain, the blockchain node needs to frequently access contract data for the contract X, and contract data for other general-purpose contracts in the general-purpose contract cache region is increased, a cache eviction mechanism is easily triggered to evict the contract data for the contract X, the blockchain node needs to acquire the contract data for the contract X from a database again, resulting in the low data access efficiency of the blockchain node. Therefore, the contract developer A may initiate a transaction request 42 (that is, the cache application request in the foregoing embodiment corresponding to FIG. 3) for applying for a cache for the contract X through the blockchain node 40a, after receiving the transaction request 42 for applying for a cache for the contract X, the blockchain node system 40 will perform consensus and uploading on the transaction request 42 for applying for a cache for the contract X, and each blockchain node in the blockchain node system 40 will execute the transaction request 42 to obtain a cache application instruction in a case that a consensus on the transaction request 42 for applying for a cache for the contract X is reached in the blockchain node system 40.

In an embodiment, before executing the cache application instruction, the blockchain node needs to first determine whether the cache application instruction satisfies a cache application condition, that is, whether more than M chain developers agree to allocate a custom contract cache region for the contract X. It is assumed that there are a total of L chain developers, M and L are positive integers, and M needs to be less than or equal to L. As shown in FIG. 4, the chain developer B agrees to allocate a custom contract cache region for the contract X, and thus transmits a transaction request 43 for cache approval to the blockchain node system 40 through the blockchain node 40b. The blockchain node system 40 will perform consensus and uploading on the transaction request 43 for cache approval, and execute the transaction request 43 for cache approval to determine that the number of cache approval results indicating that cache approval succeeds is 1 in a case that a consensus on the transaction request 43 for cache approval is reached in the blockchain node system 40. Similarly, the chain developer C, ..., and the chain developer N may respectively transmit a transaction request for cache approval through a corresponding blockchain node, and the blockchain node system 40 will execute the transaction request for cache approval to obtain a corresponding cache approval result after a consensus on the transaction request for cache approval is reached each time. In a case that the blockchain node system 40 determines that the number of cache approval results indicating that cache approval succeeds exceeds M, each blockchain node in the blockchain node system 40 may allocate a custom contract cache region for the contract X according to the cache application instruction. Optionally, the transaction request 42 for applying for a cache for the contract X may be included in the transaction request 41 for deploying the contract X, that is, the contract developer may apply for the allocation of a cache for the contract X while deploying the contract X without initiating two transaction requests.

According to the method provided in the embodiments of this application, for any contract in a blockchain, a contract developer may apply for the allocation of a custom contract cache region for the contract, and the custom contract cache region is used for storing cached contract data for the contract only. Therefore, cached contract data for other contracts in the blockchain will not affect the cached contract data for the contract. A custom contract cache region is allocated for a contract that needs to be frequently accessed in the blockchain, which can prevent cached contract data for the contract that needs to be frequently accessed from being evicted, preventing a blockchain node from frequently accessing a drive to acquire required data, and improving the data access efficiency of the blockchain node.

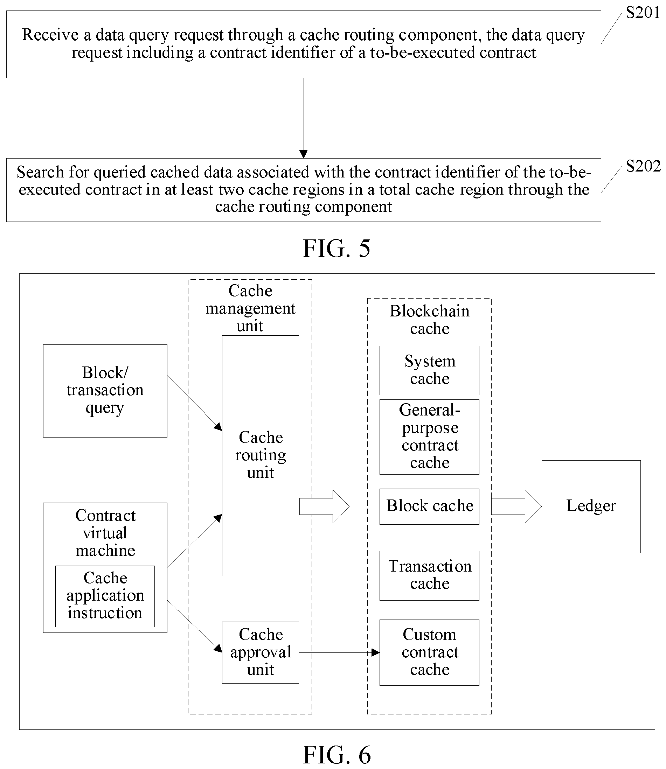

Further, referring to FIG. 5, FIG. 5 is a schematic flowchart of a blockchain-based data processing method according to an embodiment of this application. The blockchain-based data processing method may be performed by a blockchain node (such as any blockchain node in the blockchain node system in the foregoing embodiment corresponding to FIG. 1). The following description is made by taking a case where the blockchain-based data processing method is performed by a blockchain node as an example. The blockchain-based data processing method may include at least the following steps S201 and S202.

Step S201: Receive a data query request through a cache routing component, the data query request including a contract identifier of a to-be-executed contract.

Specifically, a blockchain node in a blockchain may invoke a contract (that is, a smart contract) deployed in the blockchain by initiating a transaction request. Because the blockchain may include one or more contracts, different contracts may be distinguished through contract identifiers. The contract identifier may be an identity document, a contract name, or the like. The transaction request initiated by the blockchain node may carry a contract identifier of a contract to specify a smart contract that needs to be operated by the blockchain. In a case that the blockchain node in the blockchain needs to execute the transaction request, the blockchain node needs to first acquire corresponding data, and generates a data query request according to the contract identifier in the transaction request, and after receiving the data query request, the cache routing component in the blockchain node may determine a to-be-executed contract of which data needs to be acquired according to the contract identifier in the data query request.

Step S202: Search for queried cached data associated with the contract identifier of the to-be-executed contract in at least two cache regions in a total cache region through the cache routing component.

Specifically, a total cache region of the blockchain node may include at least two cache regions, different cache regions are used for storing different data, the size of each cache region may be different, and a configured cache eviction mechanism may also be different. It can be seen from the above that contracts in the blockchain have unique contract identifiers, and thus a mapping relationship between a contract identifier of a contract and a cache region for storing the contract may be recorded in the cache routing component. For example, a contract O is stored in a cache region P, a contract identifier of the contract O may have a mapping relationship with the cache region P, and the blockchain node may quickly determine that a cache region for storing the contract O is the cache region P according to the mapping relationship between the contract identifier of the contract O and the cache region P. When receiving a routing query request, the cache routing component may search for queried cached data associated with the contract identifier of the to-be-executed contract (i.e., the queried cached data for the to-be-executed contact identified by the contact identifier) according to the contract identifier of the to-be-executed contract.

For ease of understanding, referring to FIG. 6, FIG. 6 is a schematic framework diagram of a blockchain multi-cache implementation according to an embodiment of this application. A blockchain node may divide a blockchain cache (that is, the foregoing total cache region) into a plurality of caches (that is, the foregoing cache regions), and manage the plurality of caches through a cache management unit. As shown in FIG. 6, the cache management unit includes a cache routing unit (that is, the cache routing component in the foregoing embodiment corresponding to FIG. 3) and a cache approval unit (that is, the cache approval component in the foregoing embodiment corresponding to FIG. 3). The cache routing unit is configured to find out a corresponding cache according to a contract name (that is, the foregoing contract identifier) in a query request (that is, the data query request in the foregoing embodiment corresponding to FIG. 5), and search for target data (that is, the queried cached data in the foregoing embodiment corresponding to FIG. 5) in the cache. The cache approval unit is configured to manage cache allocation for contracts to avoid a situation where a large number of contracts are maliciously created to generate a huge cache, which will cause the system to crash. In this application, a cache application contract and an application programming interface (API) are added to a blockchain, a target contract owner (that is, the contract developer in the foregoing embodiment corresponding to FIG. 4) may invoke the cache application contract via the interface and take a target contract name and the cache size as interface invocation parameters when applying, and a custom cache for the target contract is generated after the cache application contract is approved by N system developers (that is, the chain developers in the foregoing embodiment corresponding to FIG. 4).

In an embodiment, at least two cache regions may include a general-purpose contract cache region and N custom contract cache regions. N is an integer greater than or equal to 0. The general-purpose contract cache region includes cached contract data respectively for one or more general-purpose contracts. Cached contract data stored in one custom contract cache region is used for a custom contract associated with the custom contract cache region. Creation of the custom contract cache region may refer to the description of step S101 in the foregoing embodiment corresponding to FIG. 3, or may also refer to the description of the scene in the foregoing embodiment corresponding to FIG. 4. In this case, a specific implementation process of searching for the queried cached data associated with the contract identifier of the to-be-executed contract in the at least two cache regions through the cache routing component may be as follows. Custom contract identifiers for custom contracts associated with the N custom contract cache regions are acquired through the cache routing component. The contract identifier of the to-be-executed contract is searched for in the custom contract identifiers. In a case that a custom contract identifier that is the same as the contract identifier of the to-be-executed contract is found out from the custom contract identifiers, queried cached data associated with the contract identifier of the to-be-executed contract is searched for in a custom contract cache region that is associated with a custom contract for the contract identifier of the to-be-executed contract through the cache routing component. In a case that the custom contract identifier that is the same as the contract identifier of the to-be-executed contract is not found out from the custom contract identifiers, queried cached data associated with the contract identifier of the to-be-executed contract is searched for in the general-purpose contract cache region through the cache routing component. Referring to FIG. 6 again, as shown in FIG. 6, the blockchain cache (that is, a total cache region) includes a general-purpose contract cache (that is, a general-purpose contract cache region) and a custom contract cache (that is, a custom contract cache region). The custom contract cache includes one or more custom contract caches. It is assumed that the custom contract cache includes two custom contract caches, that is, a custom contract cache 1 associated with a contract A and a custom contract cache 2 associated with a contract B. In this case, in the blockchain node, cached contract data for the contract A is stored in the custom contract cache 1, cached contract data for the contract B is stored in the custom contract cache 2, and cached contract data for other contracts, such as a contract C and a contract D, in the blockchain will be stored in the general-purpose contract cache. In this case, a mapping relationship between a contract identifier of the contract A and the custom contract cache 1 and a mapping relationship between a contract identifier of the contract B and the custom contract cache 2 will be recorded in the cache routing unit. After acquiring the contract identifier of the to-be-executed contract from the data query request, the cache routing unit may acquire custom contract identifiers of custom contracts, that is, the contract identifier of the contract A and the contract identifier of the contract B, and search for the contract identifier of the to-be-executed contract in the custom contract identifiers. In a case that the contract identifier of the to-be-executed contract is the same as a certain custom contract identifier, for example, the contract identifier of the to-be-executed contract is the same as the contract identifier of the contract A, the cache routing unit will determine to search for queried cached data associated with the contract identifier of the to-be-executed contract in the custom contract cache 1. In a case that the contract identifier of the to-be-executed contract is different from the custom contract identifiers, it is indicated that the to-be-executed contract is a general-purpose contract, and the cache routing unit will search for queried cached data associated with the contract identifier of the to-be-executed contract in the general-purpose contract cache.

The blockchain node allows to customize a cache for a specified contract, including the cache size, an eviction mechanism (that is, the foregoing cache eviction mechanism), and the like. The eviction mechanism may be a least recently used (LRU) cache, a least frequently used cache, a first-in-first-out (FIFO) cache, or the like. The LRU cache refers to that if a piece of data has not been accessed in a recent period of time, it is unlikely that the data will be accessed in the future. That is, when the limited space is full of data, data that has not been accessed for the longest time needs to be evicted. The LFU cache refers to that if a piece of data has been rarely used in a recent period of time, it is unlikely that the data will be used in the future. The FIFO cache refers to that if a piece of data has been first cached, the data needs to be evicted first.

In an embodiment, the data query request further includes a to-be-executed transaction for invoking the to-be-executed contract. The at least two cache regions further include a block cache region and a transaction cache region. The block cache region is used for storing cached block data for a to-be-uploaded block that is not written into a blockchain ledger. The transaction cache region is used for storing cached transaction data for a to-be-uploaded transaction that is not written into the blockchain ledger. In this case, a specific implementation process of searching for the queried cached data associated with the contract identifier of the to-be-executed contract in the at least two cache regions through the cache routing component may be as follows. In the cache routing component, the cached transaction data in the transaction cache region is traversed according to the contract identifier of the to-be-executed contract and the to-be-executed transaction. In a case that cached transaction data associated with the contract identifier of the to-be-executed contract and the to-be-executed transaction is traversed in the transaction cache region, the traversed cached transaction data is taken as the queried cached data. In a case that the cached transaction data associated with the contract identifier of the to-be-executed contract and the to-be-executed transaction is not traversed in the transaction cache region, in the cache routing component, the cached block data in the block cache region is traversed according to the contract identifier of the to-be-executed contract and the to-be-executed transaction. In a case that cached block data associated with the contract identifier of the to-be-executed contract and the to-be-executed transaction is traversed in the block cache region, the traversed cached block data is taken as the queried cached data. In a case that the cached block data associated with the contract identifier of the to-be-executed contract and the to-be-executed transaction is not traversed in the block cache region, the queried cached data associated with the contract identifier of the to-be-executed contract is acquired from a blockchain database.

Referring to FIG. 6 again, the blockchain cache may further include a block cache (that is, a block cache region) and a transaction cache (a transaction cache region). The block cache is used for caching a recent block to improve the block synchronization speed of the blockchain nodes. The transaction cache is used for caching a recent transaction to improve the transaction access efficiency. During working of the blockchain node, for data query requests for certain transactions, queried cached data acquired by the blockchain node needs to include transaction data of the to-be-executed transaction for invoking the to-be-executed contract in addition to contract data for the to-be-executed contract. For example, the blockchain node receives one transfer transaction, and it is assumed that the transfer transaction is that A transfers RMB 100 yuan to B. A data query request associated with the transfer transaction includes a contract identifier of a transfer contract required by the transfer transaction, and the blockchain node may acquire cached contract data for the transfer contract by acquiring the contract identifier of the transfer contract through the cache management unit. It will be appreciated that with only the cached contract data for the transfer contract, the transfer transaction cannot be realized because the blockchain node does not know transaction data of the transfer transaction, that is, the balance of A and the balance of B. Therefore, the blockchain node also needs to first traverse the cached transaction data in the transaction cache according to the contract identifier of the transfer contract and the transfer transaction to determine the balance of A and the balance of B. In a case that the blockchain node does not query the balance of A and the balance of B in the transaction cache, the blockchain node traverses the cached block data in the block cache. In a case that the blockchain node still does not query the balance of A and the balance of B in the block cache, the blockchain node queries from the database. When querying the balance of A and the balance of B, the blockchain node will take the balance of A and the balance of B together with the cached contract data of the transfer contract as queried transaction data, and transmit the queried transaction data to a contract virtual machine, and the contract virtual machine may complete the transfer transaction according to the queried transaction data.

Optionally, the to-be-uploaded block includes one or more to-be-uploaded transactions. In a case that the to-be-uploaded block is written into the blockchain ledger, cached block data for the to-be-uploaded block is released from the block cache region. Cached transaction data for the one or more to-be-uploaded transactions in the to-be-uploaded block is released from the transaction cache region.

In an embodiment, the at least two cache regions further include a system cache region. The system cache region includes cached contract data respectively for one or more system contracts. In this case, a specific implementation process of searching for the queried cached data associated with the contract identifier of the to-be-executed contract in the at least two cache regions through the cache routing component may be as follows. System contract identifiers for the one or more system contracts are acquired. The contract identifier of the to-be-executed contract is searched for in the system contract identifiers. In a case that a system contract identifier that is the same as the contract identifier of the to-be-executed contract is found out from the system contract identifiers, queried cached data associated with the contract identifier of the to-be-executed contract is searched for in the system cache region that is associated with a system contract having the contract identifier of the to-be-executed contract through the cache routing component. Referring to FIG. 6 again, as shown in FIG. 6, the blockchain cache may further include a system cache (that is, a system cache region) used for storing system parameters such as gaslimit (consumption upper limit), gasprice (consumption unit price), block generation time, and block maximum transaction quantity limitation.

According to the method provided in the embodiments of this application, a blockchain node may divide a total cache region into at least two cache regions, each cache region is used for storing different data, the blockchain node may configure the size of each cache region as needed, and the eviction of cached data in different cache regions will not affect other cache regions. The blockchain node may receive a data query request through a cache routing component, and the data query request includes a contract identifier of a to-be-executed contract. Then, the blockchain node may search for queried cached data associated with the contract identifier of the to-be-executed contract in the at least two cache regions through the cache routing component. Therefore, a dedicated cache region is allocated for a contract that needs to be frequently accessed in a blockchain, preventing cached contract data for the contract from being affected by cached contract data of other contracts and being evicted, preventing a blockchain node from frequently acquiring data for the contract from a drive, and improving the data access efficiency of the blockchain node.

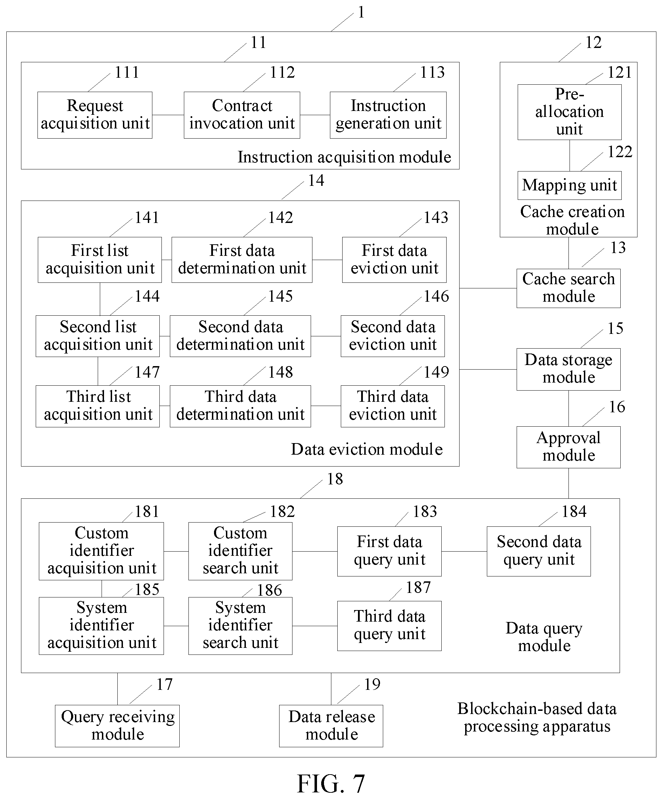

Referring to FIG. 7, FIG. 7 is a schematic structural diagram of a blockchain-based data processing apparatus according to an embodiment of this application. The blockchain-based data processing apparatus may be a computer program (including program codes) running on a computer device. For example, the blockchain-based data processing apparatus is application software. The apparatus may be configured to perform corresponding steps of the blockchain-based data processing method according to the embodiments of this application. As shown in FIG. 7, a blockchain-based data processing apparatus 1 may include: an instruction acquisition module 11, a cache creation module 12, a cache search module 13, a data eviction module 14, and a data storage module 15.

The instruction acquisition module 11 is configured to acquire a cache application instruction for a target custom contract.

The cache creation module 12 is configured to create a cache region for the target custom contract in a total cache region according to custom cache creation parameters in the cache application instruction, the total cache region including at least two cache regions, and each cache region in the total cache region has a cache eviction mechanism that is independent of that for any other cache region in the total cache region.

The cache search module 13 is configured to search for the cache region for the target custom contract in the at least two cache regions and take the cache region as a target cache region , upon reception of to-be-cached contract data for the target custom contract.

The data eviction module 14 is configured to evict cached contract data in the target cache region according to the cache eviction mechanism for the target cache region to obtain a new available cache capacity in a case that an available cache capacity of the target cache region is less than a to-be-cached capacity of the to-be-cached contract data, the new available cache capacity being greater than the to-be-cached capacity.

The data storage module 15 is configured to store the to-be-cached contract data into the target cache region according to the new available cache capacity.

Specific implementations of functions of the instruction acquisition module 11, the cache creation module 12, the cache search module 13, the data eviction module 14, and the data storage module 15 may refer to the specific description of steps S101 to S104 in the embodiment corresponding to FIG. 3.

Referring to FIG. 7 again, the instruction acquisition module 11 may include: a request acquisition unit 111, a contract invocation unit 112, and an instruction generation unit 113.

The request acquisition unit 111 is configured to acquire a cache application request, the cache application request including a cache application contract identifier and the custom cache creation parameters associated with the target custom contract.

The contract invocation unit 112 is configured to invoke a cache application contract indicated by the cache application contract identifier in the cache application request.

The instruction generation unit 113 is configured to execute, in a contract virtual machine, the cache application contract according to the custom cache creation parameters to obtain the cache application instruction for the target custom contract, the cache application instruction including the custom cache creation parameters.

Specific implementations of functions of the request acquisition unit 111, the contract invocation unit 112, and the instruction generation unit 113 may refer to the specific description of step S101 in the embodiment corresponding to FIG. 3.

Referring to FIG. 7 again, the foregoing blockchain-based data processing apparatus 1 may further include: an approval module 16.

The approval module 16 is configured to acquire one or more cache approval results for the cache application instruction through a cache approval component in a case that a consensus on the cache application instruction is reached in a consensus network, each cache approval result being data on which a consensus is reached in the consensus network.

The approval module 16 is further configured to determine that the cache application instruction satisfies a cache application condition in a case that among the one or more cache approval results, the number of cache approval results indicating that cache approval succeeds exceeds an approval threshold value.

The cache creation module 12 is configured to create the cache region for the target custom contract in the total cache region according to the custom cache creation parameters in the cache application instruction in a case that it is verified that the cache application instruction satisfies the cache application condition.

A specific implementation of functions of the approval module 16 may refer to the optional description of step S101 in the embodiment corresponding to FIG. 3.

The custom cache creation parameters include a contract identifier and a pre-allocated cache capacity of the target custom contract.

Referring to FIG. 7 again, the cache creation module 12 may include: a pre-allocation unit 121 and a mapping unit 122.

The pre-allocation unit 121 is configured to acquire a pre-allocated cache region having the pre-allocated cache capacity from the total cache region.

The mapping module 122 is configured to map the pre-allocated cache region and the contract identifier of the target custom contract to obtain the cache region for the target custom contract.

Specific implementations of functions of the pre-allocation unit 121 and the mapping unit 122 may refer to the specific description of step S101 in the embodiment corresponding to FIG. 3.

Referring to FIG. 7 again, the data eviction module 14 may include: a first list acquisition unit 141, a first data determination unit 142, and a first data eviction unit 143.

The first list acquisition unit 141 is configured to acquire a first access record list for the target cache region, the first access record list including the recent data access time respectively for at least two pieces of cached contract data, and the target cache region includes the at least two pieces of cached contract data.

The first data determination unit 142 is configured to take cached contract data whose recent data access time is the earliest as to-be-evicted target contract data in the target cache region.

The first data eviction unit 143 is configured to release the to-be-evicted target contract data, and take an available cache capacity of the target cache region from which the to-be-evicted target contract data is released as a new available cache capacity.

Specific implementations of functions of the first list acquisition unit 141, the first data determination unit 142, and the first data eviction unit 143 may refer to the specific description of S103 in the embodiment corresponding to FIG. 3.

Referring to FIG. 7 again, the data eviction module 14 may include: a second list acquisition unit 144, a second data determination unit 145, and a second data eviction unit 146.

The second list acquisition unit 144 is configured to acquire a second access record list for the target cache region, the second access record list including the number of data access respectively for at least two pieces of cached contract data within a target time period, and the target cache region including the at least two pieces of cached contract data.

The second data determination unit 145 is configured to take cached contract data with the least number of data accesses as to-be-evicted target contract data in the target cache region.

The second data eviction unit 146 is configured to release the to-be-evicted target contract data, and take an available cache capacity of the target cache region from which the to-be-evicted target contract data is released as a new available cache capacity.

Specific implementations of functions of the second list acquisition unit 144, the second data determination unit 145, and the second data eviction unit 146 may refer to the specific description of S103 in the embodiment corresponding to FIG. 3.

Referring to FIG. 7 again, the data eviction module 14 may include: a third list acquisition unit 147, a third data determination unit 148, and a third data eviction unit 149.

The third list acquisition unit 147 is configured to acquire a data storage record list for the target cache region, the data storage record list including the data cache time respectively for at least two pieces of cached contract data, and the target cache region including the at least two pieces of cached contract data.

The third data determination unit 148 is configured to take cached contract data with the earliest data cache time as to-be-evicted target contract data in the target cache region.

The third data eviction unit 149 is configured to release the to-be-evicted target contract data, and take an available cache capacity of the target cache region from which the to-be-evicted target contract data is released as a new available cache capacity.

Specific implementations of functions of the third list acquisition unit 147, the third data determination unit 148, and the third data eviction unit 149 may refer to the specific description of S103 in the embodiment corresponding to FIG. 3.

Referring to FIG. 7 again, the foregoing blockchain-based data processing apparatus 1 may further include: a query receiving module 17 and a data query module 18.

The query receiving module 17 is configured to receive a data query request through a cache routing component, the data query request including a contract identifier of a to-be-executed contract.

The data query module 18 is configured to search for queried cached data associated with the contract identifier of the to-be-executed contract in the at least two cache regions through the cache routing component.

Specific implementations of functions of the query receiving module 17 and the data query module 18 may refer to the specific description of steps S201 and S202 in the embodiment corresponding to FIG. 5.

The at least two cache regions include a general-purpose contract cache region and N custom contract cache regions; N custom contract cache regions include the target cache region; and N is an integer greater than or equal to 0. The general-purpose contract cache region includes cached contract data respectively for one or more general-purpose contracts. Cached contract data stored in one custom contract cache region is used for a custom contract associated with the custom contract cache region.

Referring to FIG. 7 again, the data query module 18 may include: a custom identifier acquisition unit 181, a custom identifier search unit 182, and a first data query unit 183.

The custom identifier acquisition unit 181 is configured to acquire custom contract identifiers of custom contracts that are associated with the N custom contract cache regions through the cache routing component.

The custom identifier search unit 182 is configured to search for the contract identifier of the to-be-executed contract in the custom contract identifiers.

The first data query unit 183 is configured to search for queried cached data associated with the contract identifier of the to-be-executed contract in a custom contract cache region that is associated with a custom contract having the contract identifier of the to-be-executed contract through the cache routing component in a case that a custom contract identifier that is the same as the contract identifier of the to-be-executed contract is found out from the custom contract identifiers.

The first data query unit 183 is further configured to search for queried cached data associated with the contract identifier of the to-be-executed contract in the general-purpose contract cache region through the cache routing component in a case that the custom contract identifier that is the same as the contract identifier of the to-be-executed contract is not found out from the custom contract identifiers.

Specific implementations of functions of the custom identifier acquisition unit 181, the custom identifier search unit 182, and the first data query unit 183 may refer to the specific description of step S202 in the embodiment corresponding to FIG. 5.

The data query request further includes a to-be-executed transaction for invoking the to-be-executed contract. The at least two cache regions further include a block cache region and a transaction cache region. The block cache region is used for storing cached block data for a to-be-uploaded block that is not written into a blockchain ledger. The transaction cache region is used for storing cached transaction data for a to-be-uploaded transaction that is not written into the blockchain ledger.

Referring to FIG. 7 again, the data query module 18 may include: a second data query unit 184.

The second data query unit 184 is configured to traverse, in the cache routing component, cached transaction data in the transaction cache region according to the contract identifier of the to-be-executed contract and the to-be-executed transaction.

The second data query unit 184 is further configured to take the traversed cached transaction data as queried cached data in a case that cached transaction data associated with the contract identifier of the to-be-executed contract and the to-be-executed transaction is traversed in the transaction cache region.

The second data query unit 184 is further configured to traverse, in the cache routing component, cached block data in the block cache region according to the contract identifier of the to-be-executed contract and the to-be-executed transaction in a case that the cached transaction data associated with the contract identifier of the to-be-executed contract and the to-be-executed transaction is not traversed in the transaction cache region.

The second data query unit 184 is further configured to take the traversed cached block data as queried cached data in a case that cached block data associated with the contract identifier of the to-be-executed contract and the to-be-executed transaction is traversed in the block cache region.

The second data query unit 184 is further configured to acquire queried cached data associated with the contract identifier of the to-be-executed contract from a blockchain database in a case that the cached block data associated with the contract identifier of the to-be-executed contract and the to-be-executed transaction is not traversed in the block cache region.

A specific implementation of functions of the second data query unit 184 may refer to the specific description of step S202 in the embodiment corresponding to FIG. 5.

The to-be-uploaded block includes one or more to-be-uploaded transactions.

Referring to FIG. 7 again, the foregoing blockchain-based data processing apparatus 1 may further include: a data release module 19.

The data release module 19 is configured to release cached block data for the to-be-uploaded block from the block cache region in a case that the to-be-uploaded block is written into the blockchain ledger.

The data release module 19 is further configured to release cached transaction data for the one or more to-be-uploaded transactions in the to-be-uploaded block from the transaction cache region.

A specific implementation of functions of the data release module 19 may refer to the optional description of step S202 in the embodiment corresponding to FIG. 5.

The at least two cache regions further include a system cache region. The system cache region includes cached contract data respectively for one or more system contracts.

Referring to FIG. 7 again, the data query module 18 may include: a system identifier acquisition unit 185, a system identifier search unit 186, and a third data query unit 187.

The system identifier acquisition unit 185 is configured to acquire system contract identifiers for the one or more system contracts.

The system identifier search unit 186 is configured to search for the contract identifier of the to-be-executed contract.

The third data query unit 187 is configured to search for queried cached data associated with the contract identifier of the to-be-executed contract in the system cache region that is associated with a system contract having the contract identifier of the to-be-executed contract through the cache routing component in a case that a system contract identifier that is the same as the contract identifier of the to-be-executed contract is found out from the system contract identifiers.

Specific implementations of functions of the system identifier acquisition unit 185, the system identifier search unit 186, and the third data query unit 187 may refer to the specific description of step S202 in the embodiment corresponding to FIG. 5.

In the embodiments of this application, a cache application instruction for a target custom contract may be acquired, and a cache region for the target custom contract is created in a total cache region according to custom cache creation parameters in the cache application instruction. Then, when to-be-cached contract data for the target custom contract is received, the cache region for the target custom contract is found out from at least two cache regions and taken as a target cache region. In a case that an available cache capacity of the target cache region is less than a to-be-cached capacity of the to-be-cached contract data, cached contract data in the target cache region is evicted according to a cache eviction mechanism for the target cache region to obtain a new available cache capacity, and finally the to-be-cached contract data is stored into the target cache region according to the new available cache capacity. The total cache region includes the at least two cache regions, and each cache region in the total cache region has a separate cache eviction mechanism, i.e., a cache eviction mechanism that is independent of that for any other cache region in the total cache region. The new available cache capacity is greater than the to-be-cached capacity. According to the method provided in the embodiments of this application, a dedicated cache region may be allocated for a contract in a blockchain system, the cache region is used for storing cached contract data of the contract only, and if a cache is insufficient, only the cached contract data in the cache region is evicted according to an eviction mechanism without affecting cached contract data of other contracts. Therefore, a dedicated cache region may be allocated for a contract that needs to be frequently accessed in a blockchain, preventing cached contract data for the contract from being affected by cached contract data of other contracts and being evicted, preventing a blockchain node from frequently acquiring data for the contract from a drive, and improving the data access efficiency of the blockchain node.

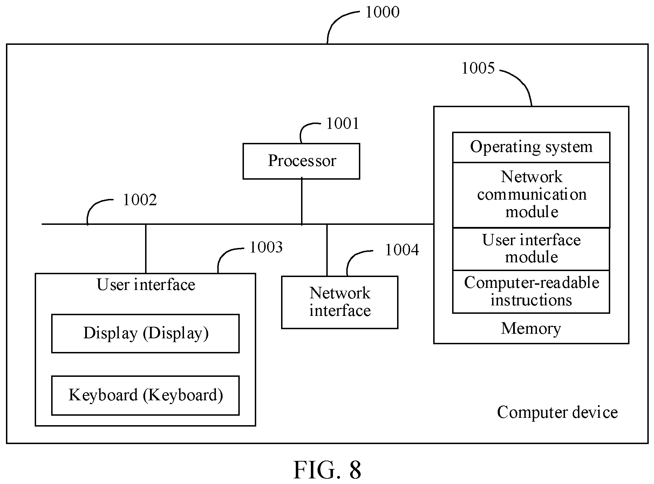

Referring to FIG. 8, FIG. 8 is a schematic structural diagram of a computer device according to an embodiment of this application. The computer device may be a device configured to perform any blockchain-based data processing method according to the embodiments of this application. As shown in FIG. 8, a computer device 1000 may include: a processor 1001, a network interface 1004, and a memory 1005. In addition, the foregoing computer device 1000 may further include: a user interface 1003 and at least one communication bus 1002. The communications bus 1002 is configured to implement connection and communication between these components. The user interface 1003 may include a display and a keyboard. Optionally, the user interface 1003 may further include a standard wired interface and wireless interface. The network interface 1004 may optionally include a standard wired interface and wireless interface (such as a WI-FI interface). The memory 1005may be a high-speed random access memory, or may also be a non-volatile memory, such as at least one magnetic disk memory. Optionally, the memory 1005 may also be at least one storage apparatus away from the foregoing processor 1001. As shown in FIG. 8, the memory 1005, as a computer-readable storage medium, may include an operating system, a network communications module, a user interface module, and computer-readable instructions.

In the computer device 1000 shown in FIG. 8, the network interface 1004 may provide a network communication function. The user interface 1003 is mainly configured to provide an input interface for users. The processor 1001 may be configured to invoke the computer-readable instructions stored in the memory 1005 to implement:
acquiring a cache application instruction for a target custom contract, and creating a cache region for the target custom contract in a total cache region according to custom cache creation parameters in the cache application instruction, the total cache region including at least two cache regions, and each cache region in the total cache region has a separate cache eviction mechanism;
searching for the cache region for the target custom contract in the at least two cache regions and taking the cache region as a target cache region , upon reception of to-be-cached contract data for the target custom contract;
evicting cached contract data in the target cache region according to the cache eviction mechanism for the target cache region to obtain a new available cache capacity in a case that an available cache capacity of the target cache region is less than a to-be-cached capacity of the to-be-cached contract data, the new available cache capacity being greater than the to-be-cached capacity; and
storing the to-be-cached contract data into the target cache region according to the new available cache capacity.

It is to be understood that the computer device 1000 described in the embodiments of this application may implement the description of any blockchain-based data processing method in the foregoing embodiments. In addition, the beneficial effects of using the same method will not be described in detail here.

In addition, it is to be pointed out here that the embodiments of this application further provide a non-volatile computer-readable storage medium, which stores computer-readable instructions executed by the foregoing blockchain-based data processing apparatus 1. The foregoing processor executes the foregoing computer-readable instructions to implement the description of any blockchain-based data processing method in the foregoing embodiments. In addition, the beneficial effects of using the same method will not be described in detail here. For technical details that are not disclosed in the embodiments of the computer-readable storage medium involved in this application, reference is made to the description of the method embodiments of this application.

The foregoing non-volatile computer-readable storage medium may be an internal storage unit of the blockchain-based data processing apparatus according to any foregoing embodiment or the foregoing computer device, such as a drive or an internal memory of the computer device. The non-volatile computer-readable storage medium may also be an external storage device of the computer device, such as a plug-in drive, a smart media card (SMC), a secure digital (SD) card, and a flash card equipped on the computer device. Further, the computer-readable storage medium may include both an internal storage unit and an external storage device of the computer device. The computer-readable storage medium is configured to store the computer-readable instructions and other programs and data required by the computer device. The computer-readable storage medium may further be configured to temporarily store data that has been outputted or will be outputted.

In addition, it is to be pointed out here that the embodiments of this application further provide a computer program product or computer program, which includes computer-readable instructions. The computer-readable instructions are stored in a computer-readable storage medium. A processor of a computer device reads the computer-readable instructions from the computer-readable storage medium and executes the computer-readable instructions to cause the computer device to perform any method according to the foregoing embodiments.

The terms "first", "second", and the like in the description, the claims, and the drawings of the embodiments of this application are used for distinguishing different objects rather than for describing a specific sequence. In addition, the terms "include" and any variation thereof are intended to cover a non-exclusive inclusion. For example, a process, method, apparatus, product or device that includes a series of steps or units is not limited to the listed steps or modules, but further optionally includes steps or modules that are not listed, or further optionally includes other steps or units that are inherent to the process, method, apparatus, product or device.

Those of ordinary skill in the art will recognize that the exemplary units and algorithm steps described with reference to the embodiments disclosed herein can be implemented as electronic hardware, computer software or a combination of the two. To clearly describe the interchangeability of hardware and software, the exemplary compositions and steps have been generally described above in terms of network elements. Whether these network elements are implemented as hardware or software depends upon particular applications and design constraints of the technical solutions. Those skilled in the art may implement the described network elements in different ways for each particular application, but the implementation shall not be regarded as exceeding the scope of this application.

## Claims

1. A blockchain-based data processing method, executable by a computer device, comprising:
acquiring (S101) a cache application instruction for a target custom contract, and creating a first cache region for the target custom contract in a total cache region according to custom cache creation parameters in the cache application instruction, the total cache region comprising at least two cache regions each having a separate cache eviction mechanism;
searching (S102) for the first cache region in the at least two cache regions and taking (S102) the first cache region as a target cache region, upon reception of to-be-cached contract data for the target custom contract;
evicting (S103) cached contract data in the target cache region according to the cache eviction mechanism for the target cache region to obtain a new cache capacity, in a case that a current cache capacity of the target cache region is less than a to-be-cached capacity of the to-be-cached contract data, the new cache capacity being greater than the to-be-cached capacity; and
storing (S104) the to-be-cached contract data into the target cache region according to the new cache capacity.

2. The method according to claim 1, wherein acquiring (S101) the cache application instruction for the target custom contract comprises:
acquiring a cache application request, the cache application request comprising a cache application contract identifier and custom cache creation parameters associated with the target custom contract;
invoking a cache application contract indicated by the cache application contract identifier in the cache application request; and
executing, in a contract virtual machine, the cache application contract according to the custom cache creation parameters to obtain the cache application instruction for the target custom contract, the cache application instruction comprising the custom cache creation parameters.

3. The method according to claim 1, further comprising:
performing the operation of creating the first cache region for the target custom contract in the total cache region according to the custom cache creation parameters in the cache application instruction in a case that it is verified that the cache application instruction satisfies a cache application condition,
the operation of verifying whether the cache application instruction satisfies the cache application condition comprising:
acquiring one or more cache approval results for the cache application instruction through a cache approval component in a case that a consensus on the cache application instruction is reached in a consensus network, each cache approval result being data on which a consensus is reached in the consensus network; and
determining that the cache application instruction satisfies the cache application condition in a case that among the one or more cache approval results, a number of cache approval results indicating that cache approval succeeds is greater than an approval threshold value.

4. The method according to claim 1, wherein the custom cache creation parameters comprise a contract identifier and a pre-allocated cache capacity of the target custom contract; and
creating the first cache region for the target custom contract in the total cache region according to the custom cache creation parameters in the cache application instruction comprises:
acquiring a pre-allocated cache region having the pre-allocated cache capacity from the total cache region; and
mapping the pre-allocated cache region and the contract identifier of the target custom contract to obtain the first cache region for the target custom contract.

5. The method according to claim 1, wherein evicting (S103) the cached contract data in the target cache region according to the cache eviction mechanism for the target cache region to obtain the new cache capacity comprises:
acquiring a first access record list for the target cache region, the first access record list comprising recent data access time of at least two pieces of cached contract data respectively, and the target cache region comprising the at least two pieces of cached contract data;
taking cached contract data whose recent data access time is earliest as to-be-evicted target contract data in the target cache region; and
releasing the to-be-evicted target contract data, and taking the cache capacity of the target cache region from which the to-be-evicted target contract data is released as the new cache capacity.

6. The method according to claim 1, wherein evicting (S103) the cached contract data in the target cache region according to the cache eviction mechanism for the target cache region to obtain the new cache capacity comprises:
acquiring a second access record list for the target cache region, the second access record list comprising numbers of data accesses respectively for at least two pieces of cached contract data within a target time period, and the target cache region comprising the at least two pieces of cached contract data;
taking cached contract data with a least number of data accesses as to-be-evicted target contract data in the target cache region; and
releasing the to-be-evicted target contract data, and taking the cache capacity of the target cache region from which the to-be-evicted target contract data is released as the new cache capacity.

7. The method according to claim 1, wherein evicting (S103) the cached contract data in the target cache region according to the cache eviction mechanism for the target cache region to obtain the new cache capacity comprises:
acquiring a data storage record list for the target cache region, the data storage record list comprising data cache time respectively for at least two pieces of cached contract data respectively, and the target cache region comprising the at least two pieces of cached contract data;
taking cached contract data with an earliest data cache time as to-be-evicted target contract data in the target cache region; and
releasing the to-be-evicted target contract data, and taking the cache capacity of the target cache region from which the to-be-evicted target contract data is released as the new cache capacity.

8. The method according to claim 1, further comprising:
receiving a data query request through a cache routing component, the data query request comprising a contract identifier of a to-be-executed contract; and
searching for queried cached data associated with the contract identifier of the to-be-executed contract in the at least two cache regions through the cache routing component.

9. The method according to claim 8, wherein the at least two cache regions comprise a general-purpose contract cache region and N custom contract cache regions; the N custom contract cache regions comprise the target cache region; N is an integer greater than or equal to 0; the general-purpose contract cache region comprises cached contract data for one or more general-purpose contracts; cached contract data stored in one custom contract cache region is used for a custom contract associated with the custom contract cache region; and
searching for queried cached data associated with the contract identifier of the to-be-executed contract in the at least two cache regions through the cache routing component comprises:
acquiring custom contract identifiers of custom contracts that are associated with the N custom contract cache regions through the cache routing component;
searching for the contract identifier of the to-be-executed contract in the custom contract identifiers;
searching, through the cache routing component, for queried cached data associated with the contract identifier of the to-be-executed contract in a custom contract cache region, that is associated with a custom contract having the contract identifier of the to-be-executed contract, in a case that a custom contract identifier that is the same as the contract identifier of the to-be-executed contract is found out from the custom contract identifiers; and
searching, through the cache routing component, for queried cached data associated with the contract identifier of the to-be-executed contract in the general-purpose contract cache region, in a case that the custom contract identifier that is the same as the contract identifier of the to-be-executed contract is not found out from the custom contract identifiers.

10. The method according to claim 8, wherein:
the data query request further comprises a to-be-executed transaction for invoking the to-be-executed contract;
the at least two cache regions further comprise a block cache region and a transaction cache region;
the block cache region is used for storing cached block data for a to-be-uploaded block that is not written into a blockchain ledger;
the transaction cache region is used for storing cached transaction data for a to-be-uploaded transaction that is not written into the blockchain ledger; and
searching for queried cached data associated with the contract identifier of the to-be-executed contract in the at least two cache regions through the cache routing component comprises:
traversing, in the cache routing component, cached transaction data in the transaction cache region according to the contract identifier of the to-be-executed contract and the to-be-executed transaction;
taking traversed cached transaction data as queried cached data in a case that cached transaction data associated with the contract identifier of the to-be-executed contract and the to-be-executed transaction is traversed in the transaction cache region;
traversing, in the cache routing component, cached block data in the block cache region according to the contract identifier of the to-be-executed contract and the to-be-executed transaction in a case that the cached transaction data associated with the contract identifier of the to-be-executed contract and the to-be-executed transaction is not traversed in the transaction cache region;
taking traversed cached block data as queried cached data in a case that cached block data associated with the contract identifier of the to-be-executed contract and the to-be-executed transaction is traversed in the block cache region; and
acquiring queried cached data associated with the contract identifier of the to-be-executed contract from a blockchain database in a case that the cached block data associated with the contract identifier of the to-be-executed contract and the to-be-executed transaction is not traversed in the block cache region.

11. The method according to claim 10, wherein the to-be-uploaded block comprises one or more to-be-uploaded transactions; and
the method further comprises:
releasing cached block data for the to-be-uploaded block from the block cache region in a case that the to-be-uploaded block is written into the blockchain ledger; and
releasing cached transaction data for the one or more to-be-uploaded transactions in the to-be-uploaded block from the transaction cache region.

12. The method according to claim 8, wherein the at least two cache regions further comprise a system cache region; the system cache region comprises cached contract data respectively for one or more system contracts; and
searching for queried cached data associated with the contract identifier of the to-be-executed contract in the at least two cache regions through the cache routing component comprises:
acquiring system contract identifiers of the one or more system contracts;
searching for the contract identifier of the to-be-executed contract in the system contract identifiers; and
searching for queried cached data associated with the contract identifier of the to-be-executed contract in the system cache region that is associated with a system contract having the contract identifier of the to-be-executed contract through the cache routing component in a case that a system contract identifier that is the same as the contract identifier of the to-be-executed contract is found out from the system contract identifiers.

13. A computer device, comprising: a processor, a memory, and a network interface,
the processor being connected to the memory and the network interface, and the memory storing computer-readable instructions that, when executed by the processor, cause the processor to perform the method according to any one of claims 1 to 12.

14. A non-volatile computer-readable storage medium, storing computer-readable instructions, the computer-readable instructions being adapted to be loaded by a processor to perform the method according to any one of claims 1 to 12.

15. A computer program product, comprising computer-readable instructions, the computer-readable instructions being stored in a computer-readable storage medium, a processor of a computer device reading the computer-readable instructions from the computer-readable storage medium, and the processor executing the computer-readable instructions to implement the method according to any one of claims 1 to 12.

## Patentansprüche

1. Blockkettenbasiertes Datenverarbeitungsverfahren, das von einer Computervorrichtung ausführbar ist und Folgendes umfasst:
Erfassen (S101) einer Cacheanwendungsanweisung für einen benutzerdefinierten Zielvertrag und Erstellen einer ersten Cacheregion für den benutzerdefinierten Zielvertrag in einer Cachegesamtregion gemäß benutzerdefinierten Cacheerstellungsparametern in der Cacheanwendungsanweisung, wobei die Cachegesamtregion mindestens zwei Cacheregionen umfasst, von denen jede einen separaten Cacheräumungsmechanismus aufweist;
Durchsuchen (S102) der mindestens zwei Cacheregionen nach der ersten Cacheregion und Übernehmen (S102) der ersten Cacheregion als eine Zielcacheregion nach Empfang von zwischenzuspeichernden Vertragsdaten für den benutzerdefinierten Zielvertrag;
Räumen (S103) der zwischengespeicherten Vertragsdaten in der Zielcacheregion gemäß dem Cacheräumungsmechanismus für die Zielcacheregion, um eine neue Cachekapazität zu erhalten, in einem Fall, in dem die aktuelle Cachekapazität der Zielcacheregion kleiner ist als die zwischenzuspeichernde Kapazität der zwischenzuspeichernden Vertragsdaten, wobei die neue Cachekapazität größer ist als die zwischenzuspeichernde Kapazität; und
Speichern (S104) der zwischenzuspeichernden Vertragsdaten in der Zielcacheregion gemäß der neuen Cachekapazität.

2. Verfahren nach Anspruch 1, wobei das Erfassen (S101) der Cacheanwendungsanweisung für den benutzerdefinierten Zielvertrag Folgendes umfasst:
Erfassen einer Cacheanwendungsanforderung, wobei die Cacheanwendungsanforderung eine Cacheanwendungsvertragskennung und benutzerdefinierte Cacheerstellungsparameter umfasst, die mit dem benutzerdefinierten Zielvertrag verknüpft sind;
Aufrufen eines Cacheanwendungsvertrags der von der Cacheanwendungsvertragskennung in der Cacheanwendungsanforderung angezeigt wird; und
Ausführen des Cacheanwendungsvertrags gemäß den benutzerdefinierten Cacheerstellungsparametern in einer virtuellen Vertragsmaschine, um die Cacheanwendungsanweisung für den benutzerdefinierten Zielvertrag zu erhalten, wobei die Cacheanwendungsanweisung die benutzerdefinierten Cacheerstellungsparameter umfasst.

3. Verfahren nach Anspruch 1, das ferner Folgendes umfasst:
Durchführen der Operation des Erstellens der ersten Cacheregion für den benutzerdefinierten Zielvertrag in der Cachegesamtregion gemäß den benutzerdefinierten Cacheerstellungsparametern in der Cacheanwendungsanweisung in einem Fall, in dem verifiziert wird, dass die Cacheanwendungsanweisung eine Cacheanwendungsbedingung erfüllt,
wobei die Operation des Verifizierens, ob die Cacheanwendungsanweisung die Cacheanwendungsbedingung erfüllt, Folgendes umfasst:
Erfassen von einem oder mehreren Cachegenehmigungsergebnissen für die Cacheanwendungsanweisung über eine Cachegenehmigungskomponente in einem Fall, in dem in einem Konsensnetzwerk ein Konsens über die Cacheanwendungsanweisung erreicht wird, wobei sich jedes Cachegenehmigungsergebnis auf Daten bezieht, zu denen im Konsensnetzwerk ein Konsens erreicht wird; und
in einem Fall, in dem unter dem einen oder den mehreren Cachegenehmigungsergebnissen eine Anzahl von Cachegenehmigungsergebnissen anzeigen, dass eine Cachegenehmigung erfolgreich ist, größer ist als ein Genehmigungsschwellwert, Bestimmen dass die Cacheanwendungsanweisung die Cacheanwendungsbedingung erfüllt.

4. Verfahren nach Anspruch 1, wobei die benutzerdefinierten Cacheerstellungsparameter eine Vertragskennung und eine vorab zugeteilte Cachekapazität des benutzerdefinierten Zielvertrags umfassen; und
das Erstellen der ersten Cacheregion für den benutzerdefinierten Zielvertrag in der Cachegesamtregion gemäß den benutzerdefinierten Cacheerstellungsparametern in der Cacheanwendungsanweisung umfasst Folgendes:
Erstellen einer vorab zugeteilten Cacheregion, die eine vorab zugeteilte Cachekapazität aufweist, in der Cachegesamtregion; und
Zuordnen einer vorab zugeteilten Cacheregion und der Vertragskennung des benutzerdefinierten Zielvertrags, um die erste Cacheregion für den benutzerdefinierten Zielvertrag zu erhalten.

5. Verfahren nach Anspruch 1, wobei das Räumen (S103) der zwischengespeicherten Vertragsdaten in der Zielcacheregion gemäß dem Cacheräumungsmechanismus für die Zielcacheregion, um die neue Cachekapazität zu erhalten, Folgendes umfasst:
Erfassen einer ersten Zugriffsdatensatzliste für die Zielcacheregion, wobei die erste Zugriffsdatensatzliste jeweils eine jüngste Datenzugriffszeit von mindestens zwei Teilen von zwischengespeicherten Vertragsdaten umfasst, und wobei die Zielcacheregion die mindestens zwei Teile von zwischengespeicherten Vertragsdaten umfasst;
Übernehmen von zwischengespeicherten Vertragsdaten, deren jüngste Datenzugriffszeit eine früheste ist, als auszuräumende Zielvertragsdaten in der Zielcacheregion; und
Freigeben der auszuräumenden Zielvertragsdaten und Übernehmen der Cachekapazität der Zielcacheregion, aus der die auszuräumenden Zielvertragsdaten freigegeben werden, als die neue Cachekapazität.

6. Verfahren nach Anspruch 1, wobei das Räumen (S103) der zwischengespeicherten Vertragsdaten in der Zielcacheregion gemäß dem Cacheräumungsmechanismus für die Zielcacheregion, um die neue Cachekapazität zu erhalten, Folgendes umfasst:
Erfassen einer zweiten Zugriffsdatensatzliste für die Zielcacheregion, wobei die zweite Zugriffsdatensatzliste jeweils Anzahlen von Datenzugriffen für mindestens zwei Teile von zwischengespeicherten Vertragsdaten in einer Zielzeitperiode umfasst, und wobei die Zielcacheregion die mindestens zwei Teile von zwischengespeicherten Vertragsdaten umfasst;
Übernehmen von zwischengespeicherten Vertragsdaten mit einer kleinsten Anzahl von Datenzugriffen als auszuräumende Zielvertragsdaten in der Zielcacheregion; und
Freigeben der auszuräumenden Zielvertragsdaten und Übernehmen der Cachekapazität der Zielcacheregion, aus der die auszuräumenden Zielvertragsdaten freigegeben werden, als die neue Cachekapazität.

7. Verfahren nach Anspruch 1, wobei das Räumen (S103) der zwischengespeicherten Vertragsdaten in der Zielcacheregion gemäß dem Cacheräumungsmechanismus für die Zielcacheregion, um die neue Cachekapazität zu erhalten, Folgendes umfasst:
Erfassen einer Datenspeicherdatensatzliste für die Zielcacheregion, wobei die Datenspeicherdatensatzliste jeweils eine Datencachezeit für die mindestens zwei Teile von zwischengespeicherten Vertragsdaten umfasst, und wobei die Zielcacheregion die mindestens zwei Teile von zwischengespeicherten Vertragsdaten umfasst;
Übernehmen von zwischengespeicherten Vertragsdaten mit einer frühesten Datencachezeit als auszuräumende Zielvertragsdaten in der Zielcacheregion; und
Freigeben der auszuräumenden Zielvertragsdaten und Übernehmen der Cachekapazität der Zielcacheregion, aus der die auszuräumenden Zielvertragsdaten freigegeben werden, als die neue Cachekapazität.

8. Verfahren nach Anspruch 1, das ferner Folgendes umfasst:
Empfangen einer Datenabfrageanforderung über eine Cacheroutingkomponente, wobei die Datenabfrageanforderung eine Vertragskennung eines auszuführenden Vertrags umfasst; und
Suchen nach abgefragten zwischengespeicherten Daten, die mit der Vertragskennung des auszuführenden Vertrags verknüpft sind, in den mindestens zwei Cacheregionen über die Cacheroutingkomponente.

9. Verfahren nach Anspruch 8, wobei die mindestens zwei Cacheregionen eine Mehrzweckvertragscacheregion und N benutzerdefinierte Vertragscacheregionen umfassen; die N benutzerdefinierten Vertragscacheregionen die Zielcacheregion umfasst; N eine Ganzzahl größer als oder gleich 0 ist; die Mehrzweckvertragscacheregion zwischengespeicherte Vertragsdaten für einen oder mehrere Mehrzweckverträge umfasst; wobei zwischengespeicherte Vertragsdaten, die in einer benutzerdefinierten Vertragscacheregion gespeichert sind, für einen benutzerdefinierten Vertrag verwendet werden, der mit der benutzerdefinierten Vertragscacheregion verknüpft ist; und
das Suchen nach abgefragten zwischengespeicherten Daten, die mit der Vertragskennung des auszuführenden Vertrags verknüpft sind, in den mindestens zwei Cacheregionen über die Cacheroutingkomponente umfasst Folgendes:
Erfassen von benutzerdefinierten Vertragskennungen von benutzerdefinierten Verträgen, die mit den N benutzerdefinierten Vertragscacheregionen verknüpft sind, über die Cacheroutingkomponente;
Suchen nach der Vertragskennung des auszuführenden Vertrags in den benutzerdefinierten Vertragskennungen;
Suchen nach abgefragten zwischengespeicherten Daten, die mit der Vertragskennung des auszuführenden Vertrags verknüpft sind, durch die Cacheroutingkomponente in einer benutzerdefinierten Vertragscacheregion, die mit einem benutzerdefinierten Vertrag verknüpft ist, der die Vertragskennung des auszuführenden Vertrags aufweist, in einem Fall, in dem eine benutzerdefinierte Vertragskennung, die dieselbe ist wie die Vertragskennung des auszuführenden Vertrags, in den benutzerdefinierten Vertragskennungen gefunden wird; und
Suchen nach abgefragten zwischengespeicherten Daten, die mit der Vertragskennung des auszuführenden Vertrags verknüpft sind, durch die Cacheroutingkomponente in der Mehrzweckvertragscacheregion, in einem Fall, in dem die benutzerdefinierte Vertragskennung, die dieselbe ist wie die Vertragskennung des auszuführenden Vertrags, in den benutzerdefinierten Vertragskennungen nicht gefunden wird.

10. Verfahren nach Anspruch 8, wobei:
die Datenabfrageanforderung ferner eine auszuführende Transaktion zum Aufrufen des auszuführenden Vertrags umfasst;
die mindestens zwei Cacheregionen ferner eine Blockcacheregion für einen zu ladenden Block und eine Transaktionscacheregion umfasst;
die Blockcacheregion zum Speichern von zwischengespeicherten Blockdaten für einen zu ladenden Block verwendet wird, der nicht in ein Blockkettenhauptbuch geschrieben ist;
die Transaktionscacheregion zum Speichern von zwischengespeicherten Transaktionsdaten für eine zu ladende Transaktion verwendet wird, der nicht in das Blockkettenhauptbuch geschrieben ist; und
das Suchen nach abgefragten zwischengespeicherten Daten, die mit der Vertragskennung des auszuführenden Vertrags verknüpft sind, in den mindestens zwei Cacheregionen über die Cacheroutingkomponente umfasst Folgendes:
Durchqueren von zwischengespeicherten Transaktionsdaten in der Transaktionscacheregion gemäß der Vertragskennung des auszuführenden Vertrags und der auszuführenden Transaktion in der Cacheroutingkomponente;
Übernehmen von durchquerten zwischengespeicherten Transaktionsdaten als abgefragte zwischengespeicherte Daten in einem Fall, in dem zwischengespeicherte Transaktionsdaten, die mit der Vertragskennung des auszuführenden Vertrags und der auszuführenden Transaktion verknüpft sind, in der Transaktionscacheregion durchquert werden;
Durchquerens von zwischengespeicherten Blockdaten in der Blockcacheregion gemäß der Vertragskennung des auszuführenden Vertrags und der auszuführenden Transaktion in der Cacheroutingkomponente in einem Fall, in dem die zwischengespeicherten Transaktionsdaten, die mit der Vertragskennung des auszuführenden Vertrags und der auszuführenden Transaktion verknüpft sind, in der Transaktionscacheregion nicht durchquert werden;
Übernehmen von durchquerten zwischengespeicherten Blockdaten als abgefragte zwischengespeicherte Daten in einem Fall, in dem zwischengespeicherte Blockdaten, die mit der Vertragskennung des auszuführenden Vertrags und der auszuführenden Transaktion verknüpft sind, in der Blockcacheregion durchquert werden; und
Erfassen von durchquerten zwischengespeicherten Daten, die mit der Vertragskennung des auszuführenden Vertrags verknüpft sind, in einer Blockkettendatenbank in einem Fall, in dem die zwischengespeicherten Blockdaten, die mit der Vertragskennung des auszuführenden Vertrags und der auszuführenden Transaktion verknüpft sind, in der Blockcacheregion nicht durchquert werden.

11. Verfahren nach Anspruch 10, wobei der zu ladende Block eine oder mehrere zu ladende Transaktionen umfasst; und
das Verfahren ferner Folgendes umfasst:
Freigeben von zwischengespeicherten Blockdaten für den zu ladenden Block aus der Blockcacheregion in einem Fall, in dem der zu ladende Block in das Blockkettenhauptbuch geschrieben ist; und
Freigeben der zwischengespeicherten Transaktionsdaten für die eine oder die mehreren zu ladenden Transaktionen im zu ladenden Block aus der Transaktionscacheregion.

12. Verfahren nach Anspruch 8, wobei die mindestens zwei Cacheregionen ferner eine Systemcacheregion umfassen, wobei die Systemcacheregion jeweils zwischengespeicherte Vertragsdaten für einen oder mehrere Systemverträge umfasst; und
das Suchen nach abgefragten zwischengespeicherten Daten, die mit der Vertragskennung des auszuführenden Vertrags verknüpft sind, in den mindestens zwei Cacheregionen über die Cacheroutingkomponente umfasst Folgendes:
Erfassen von Systemvertragskennungen des einen oder der mehreren Systemverträge;
Suchen nach der Vertragskennung des auszuführenden Vertrags in den Systemvertragskennungen; und
Suchen nach abgefragten zwischengespeicherten Daten, die mit der Vertragskennung des auszuführenden Vertrags verknüpft sind, in der Systemcacheregion, die mit einem Systemvertrag verknüpft ist, der die Vertragskennung des auszuführenden Vertrags aufweist, über die Cacheroutingkomponente in einem Fall, in dem eine Systemvertragskennung, die dieselbe ist wie die Vertragskennung des auszuführenden Vertrags, in den Systemvertragskennungen gefunden wird.

13. Computervorrichtung, die einen Prozessor, einen Speicher und eine Netzwerkschnittstelle umfasst,
wobei der Prozessor mit dem Speicher und der Netzwerkschnittstelle verbunden ist, und wobei der Speicher computerlesbare Anweisungen speichert, die, wenn sie vom Prozessor ausgeführt werden, den Prozessor veranlassen, das Verfahren nach einem der Ansprüche 1 bis 12 durchzuführen.

14. Nichtflüchtiges computerlesbares Speichermedium, auf dem computerlesbare Anweisungen gespeichert sind, wobei die computerlesbaren Anweisungen angepasst sind, von einem Prozessor geladen zu werden, um das Verfahren nach einem der Ansprüche 1 bis 12 durchzuführen.

15. Computerprogrammprodukt, das computerlesbare Anweisungen umfasst, wobei die computerlesbaren Anweisungen in einem computerlesbaren Speichermedium gespeichert sind, wobei ein Prozessor einer Computervorrichtung die computerlesbaren Anweisungen im computerlesbaren Speichermedium liest, und wobei der Prozessor die computerlesbaren Anweisungen ausführt, um das Verfahren nach einem der Ansprüche 1 bis 12 zu implementieren.

## Revendications

1. Procédé de traitement de données basé sur une chaîne de blocs, exécutable par un dispositif informatique, comprenant :
l'acquisition (S101) d'une instruction d'application de cache pour un contrat personnalisé cible, et la création d'une première région de cache pour le contrat personnalisé cible dans une région de cache totale selon des paramètres de création de cache personnalisés dans l'instruction d'application de cache, la région de cache totale comprenant au moins deux régions de cache ayant chacune un mécanisme d'éviction de cache distinct ;
la recherche (S102) de la première région de cache dans les au moins deux régions de cache et la prise (S102) de la première région de cache comme région de cache cible à la réception de données de contrat à mettre en cache pour le contrat personnalisé cible ;
l'éviction (S103) de données de contrat mises en cache dans la région de cache cible selon le mécanisme d'éviction de cache pour la région de cache cible afin d'obtenir une nouvelle capacité de cache dans le cas où une capacité de cache actuelle de la région de cache cible est inférieure à une capacité à mettre en cache des données de contrat à mettre en cache, la nouvelle capacité de cache étant supérieure à la capacité à mettre en cache ; et
le stockage (S104) des données de contrat à mettre en cache dans la région de cache cible selon la nouvelle capacité de cache.

2. Procédé selon la revendication 1, dans lequel l'acquisition (S101) de l'instruction d'application de cache pour le contrat personnalisé cible comprend :
l'acquisition d'une demande d'application de cache, la demande d'application de cache comprenant un identifiant de contrat d'application de cache et des paramètres de création de cache personnalisés associés au contrat personnalisé cible ;
l'invocation d'un contrat d'application de cache indiqué par l'identifiant de contrat d'application de cache dans la demande d'application de cache ; et
l'exécution, dans une machine virtuelle de contrat, du contrat d'application de cache selon les paramètres de création de cache personnalisés afin d'obtenir l'instruction d'application de cache pour le contrat personnalisé cible, l'instruction d'application de cache comprenant les paramètres de création de cache personnalisés.

3. Procédé selon la revendication 1, en outre :
la réalisation de l'opération consistant à créer la première région de cache pour le contrat personnalisé cible dans la région de cache totale selon les paramètres de création de cache personnalisés dans l'instruction d'application de cache dans le cas où il est vérifié que l'instruction d'application de cache satisfait à une condition d'application de cache,
l'opération consistant à vérifier si l'instruction d'application de cache satisfait à la condition d'application de cache comprenant ce qui suit :
acquérir un ou plusieurs résultats d'approbation de cache pour l'instruction d'application de cache par l'intermédiaire d'un composant d'approbation de cache dans le cas où un consensus sur l'instruction d'application de cache est atteint dans un réseau de consensus, chaque résultat d'approbation de cache étant des données sur lesquelles un consensus est atteint dans le réseau de consensus ; et
déterminer que l'instruction d'application de cache satisfait à la condition d'application de cache dans le cas où, parmi les un ou plusieurs résultats d'approbation de cache, un nombre de résultats d'approbation de cache indiquant qu'une approbation de cache est réussie est supérieur à une valeur seuil d'approbation.

4. Procédé selon la revendication 1, dans lequel les paramètres de création de cache personnalisés comprennent un identifiant de contrat et une capacité de cache pré-allouée du contrat personnalisé cible ; et
la création de la première région de cache pour le contrat personnalisé cible dans la région de cache totale selon les paramètres de création de cache personnalisés dans l'instruction d'application de cache comprend :
l'acquisition d'une région de cache pré-allouée ayant la capacité de cache pré-allouée à partir de la région de cache totale ; et
le mappage de la région de cache pré-allouée et de l'identifiant de contrat du contrat personnalisé cible afin d'obtenir la première région de cache pour le contrat personnalisé cible.

5. Procédé selon la revendication 1, dans lequel l'éviction (S103) des données de contrat mises en cache dans la région de cache cible selon le mécanisme d'éviction de cache pour la région de cache cible afin d'obtenir la nouvelle capacité de cache comprend :
l'acquisition d'une première liste d'enregistrements d'accès pour la région de cache cible, la première liste d'enregistrements d'accès comprenant un temps d'accès aux données récent d'au moins deux données de contrat mises en cache respectivement, et la région de cache cible comprenant les au moins deux données de contrat mises en cache ;
la prise des données de contrat mises en cache dont le temps d'accès aux données récent vient le plus tôt comme données de contrat cibles à évincer dans la région de cache cible ; et
la libération des données de contrat cibles à évincer, et la prise de la capacité de cache de la région de cache cible à partir de laquelle les données de contrat cibles à évincer sont libérées comme nouvelle capacité de cache.

6. Procédé selon la revendication 1, dans lequel l'éviction (S103) des données de contrat mises en cache dans la région de cache cible selon le mécanisme d'éviction de cache pour la région de cache cible afin d'obtenir la nouvelle capacité de cache comprend :
l'acquisition d'une deuxième liste d'enregistrements d'accès pour la région de cache cible, la deuxième liste d'enregistrements d'accès comprenant de nombreux accès aux données respectivement pour au moins deux données de contrat mises en cache dans une période de temps cible, et la région de cache cible comprenant les au moins deux données de contrat mises en cache ;
la prise de données de contrat mises en cache avec le plus petit nombre d'accès aux données comme données de contrat cibles à évincer dans la région de cache cible ; et
la libération des données de contrat cibles à évincer, et la prise de la capacité de cache de la région de cache cible à partir de laquelle les données de contrat cibles à évincer sont libérées comme nouvelle capacité de cache.

7. Procédé selon la revendication 1, dans lequel l'éviction (S103) des données de contrat mises en cache dans la région de cache cible selon le mécanisme d'éviction de cache pour la région de cache cible afin d'obtenir la nouvelle capacité de cache comprend :
l'acquisition d'une liste d'enregistrements de stockage de données pour la région de cache cible, la liste d'enregistrements de stockage de données comprenant un temps de cache de données respectivement pour au moins deux données de contrat mises en cache respectivement, et la région de cache cible comprenant les au moins deux données de contrat mises en cache ;
la prise de données de contrat mises en cache avec le temps de cache de données venant le plus tôt comme données de contrat cibles à évincer dans la région de cache cible ; et
la libération des données de contrat cibles à évincer, et la prise de la capacité de cache de la région de cache cible à partir de laquelle les données de contrat cibles à évincer sont libérées comme nouvelle capacité de cache.

8. Procédé selon la revendication 1, en outre :
la réception d'une demande d'interrogation de données par l'intermédiaire d'un composant de routage de cache, la demande d'interrogation de données comprenant un identifiant de contrat d'un contrat à exécuter ; et
la recherche de données mises en cache interrogées associées à l'identifiant de contrat du contrat à exécuter dans les au moins deux régions de cache par l'intermédiaire du composant de routage de cache.

9. Procédé selon la revendication 8, dans lequel les au moins deux régions de cache comprennent une région de cache de contrat à usage général et N régions de cache de contrat personnalisé ; les N régions de cache de contrat personnalisé comprennent la région de cache cible ; N est un nombre entier supérieur ou égal à 0 ; la région de cache de contrat à usage général comprend des données de contrat mises en cache pour un ou plusieurs contrats à usage général ; les données de contrat mises en cache stockées dans une région de cache de contrat personnalisé sont utilisées pour un contrat personnalisé associé à la région de cache de contrat personnalisé ; et
la recherche de données mises en cache interrogées associées à l'identifiant de contrat du contrat à exécuter dans les au moins deux régions de cache par l'intermédiaire du composant de routage de cache comprend :
l'acquisition d'identifiants de contrats personnalisés de contrats personnalisés qui sont associés aux N régions de cache de contrat personnalisé par l'intermédiaire du composant de routage de cache ;
la recherche de l'identifiant de contrat du contrat à exécuter dans les identifiants de contrats personnalisés ;
la recherche, par l'intermédiaire du composant de routage de cache, de données mises en cache interrogées associées à l'identifiant de contrat du contrat à exécuter dans une région de cache de contrat personnalisé qui est associée à un contrat personnalisé ayant l'identifiant de contrat du contrat à exécuter dans le cas où un identifiant de contrat personnalisé qui est le même que l'identifiant de contrat du contrat à exécuter est trouvé parmi les identifiants de contrats personnalisés ; et
la recherche, par l'intermédiaire du composant de routage de cache, de données mises en cache interrogées associées à l'identifiant de contrat du contrat à exécuter dans la région de cache de contrat à usage général dans le cas où l'identifiant de contrat personnalisé qui est le même que l'identifiant de contrat du contrat à exécuter n'est pas trouvé parmi les identifiants de contrats personnalisés.

10. Procédé selon la revendication 8, dans lequel :
la demande d'interrogation de données comprend en outre une transaction à exécuter pour invoquer le contrat à exécuter ;
les au moins deux régions de cache comprennent en outre une région de cache de bloc et une région de cache de transaction ;
la région de cache de bloc est utilisée pour stocker des données de bloc mises en cache pour un bloc à charger qui n'est pas écrit dans un grand livre de chaîne de blocs ;
la région de cache de transaction est utilisée pour stocker des données de transaction mises en cache pour une transaction à charger qui n'est pas écrite dans le grand livre de chaîne de blocs ; et
la recherche de données mises en cache interrogées associées à l'identifiant de contrat du contrat à exécuter dans les au moins deux régions de cache par l'intermédiaire du composant de routage de cache comprend :
le parcours, dans le composant de routage de cache, de données de transaction mises en cache dans la région de cache de transaction selon l'identifiant de contrat du contrat à exécuter et la transaction à exécuter ;
la prise des données de transaction mises en cache parcourues comme données mises en cache interrogées dans le cas où des données de transaction mises en cache associées à l'identifiant de contrat du contrat à exécuter et la transaction à exécuter sont parcourues dans la région de cache de transaction ;
le parcours, dans le composant de routage de cache, de données de bloc mises en cache dans la région de cache de bloc selon l'identifiant de contrat du contrat à exécuter et la transaction à exécuter dans le cas où les données de transaction mises en cache associées à l'identifiant de contrat du contrat à exécuter et la transaction à exécuter ne sont pas parcourues dans la région de cache de transaction ;
la prise des données de bloc mises en cache parcourues comme données mises en cache interrogées dans le cas où les données de bloc mises en cache associées à l'identifiant de contrat du contrat à exécuter et la transaction à exécuter sont parcourues dans la région de cache de bloc ; et
l'acquisition de données mises en cache interrogées associées à l'identifiant de contrat du contrat à exécuter à partir d'une base de données de chaîne de blocs dans le cas où les données de bloc mises en cache associées à l'identifiant de contrat du contrat à exécuter et la transaction à exécuter ne sont pas parcourues dans la région de cache de bloc.

11. Procédé selon la revendication 10, dans lequel le bloc à charger comprend une ou plusieurs transactions à charger ; et
le procédé comprend en outre :
la libération de données de bloc mises en cache pour le bloc à charger à partir de la région de cache de bloc dans le cas où le bloc à charger est écrit dans le grand livre de chaîne de blocs ; et
la libération de données de transaction mises en cache pour les une ou plusieurs transactions à charger dans le bloc à charger à partir de la région de cache de transaction.

12. Procédé selon la revendication 8, dans lequel les au moins deux régions de cache comprennent en outre une région de cache de système ; la région de cache de système comprend des données de contrat mises en cache respectivement pour un ou plusieurs contrats de système ; et
la recherche de données mises en cache interrogées associées à l'identifiant de contrat du contrat à exécuter dans les au moins deux régions de cache par l'intermédiaire du composant de routage de cache comprend :
l'acquisition d'identifiants de contrat de système des un ou plusieurs contrats de système ;
la recherche de l'identifiant de contrat du contrat à exécuter dans les identifiants de contrat de système ; et
la recherche de données mises en cache interrogées associées à l'identifiant de contrat du contrat à exécuter dans la région de cache de système qui est associée à un contrat de système ayant l'identifiant de contrat du contrat à exécuter par l'intermédiaire du composant de routage de cache dans le cas où un identifiant de contrat de système qui est le même que l'identifiant de contrat du contrat à exécuter est trouvé parmi les identifiants de contrat de système.

13. Dispositif informatique, comprenant : un processeur, une mémoire et une interface réseau, le processeur étant connecté à la mémoire et à l'interface réseau, et la mémoire stockant des instructions lisibles par ordinateur qui, lorsqu'elles sont exécutées par le processeur, amènent le processeur à effectuer le procédé selon l'une quelconque des revendications 1 à 12.

14. Support de stockage non volatile lisible par ordinateur stockant des instructions lisibles par ordinateur, les instructions lisibles par ordinateur étant adaptées pour être chargées par un processeur pour effectuer le procédé selon l'une quelconque des revendications 1 à 12.

15. Produit de programme informatique comprenant des instructions lisibles par ordinateur, les instructions lisibles par ordinateur étant stockées dans un support de stockage lisible par ordinateur, un processeur d'un dispositif informatique lisant les instructions lisibles par ordinateur à partir du support de stockage lisible par ordinateur, et le processeur exécutant les instructions lisibles par ordinateur pour mettre en œuvre le procédé selon l'une quelconque des revendications 1 à 12.
